# EUROPEAN PATENT APPLICATION

(11) **EP 4 783 673 A1**
(43) Date of publication of application: **29.07.2026**
(21) Application number: 24870676.4
(22) Date of filing: 24.09.2024
(51) Int. Cl.: H04W 40/22

(54) **COMMUNICATION METHOD AND COMMUNICATION APPARATUS**

(30) Priority: 25.09.2023 CN 202311243141
(71) Applicant: HUAWEI TECHNOLOGIES CO., LTD., Shenzhen 518129 (CN)
(72) Inventor: YU, Jian, Shenzhen, Guangdong 518129 (CN); GAN, Ming, Shenzhen, Guangdong 518129 (CN)
(74) Representative: Thun, Clemens
(86) International application number: PCT/CN2024/120540
(87) International publication number: WO 2025/067132

(57) **Abstract**

This application provides a communication method. The method may be applied to a WLAN system supporting 802.11 series protocols such as a next-generation Wi-Fi protocol of IEEE 802.11ax, for example, 802.11be, Wi-Fi 7, or EHT, and a next-generation protocol of 802.11be, for example, Wi-Fi 8, and may be further applied to a UWB-based wireless personal area network system and a sensing system. The method includes: A source MLD obtains information about a relay MLD through a low-frequency communication link, and sets the relay MLD through the low-frequency communication link, so that information can be transmitted to a destination MLD through the relay MLD on a high-frequency communication link, to implement relay transmission. In the communication method, the source MLD obtains the information about the relay MLD at a low frequency, and sets the relay MLD at the low frequency. In this way, the low frequency assists a high frequency in relay transmission establishment, thereby reducing relay transmission establishment overheads and improving relay transmission performance.

## Description

This application claims priority to Chinese Patent Application No. 202311243141.1, filed with the China National Intellectual Property Administration on September 25, 2023 and entitled "COMMUNICATION METHOD AND COMMUNICATION APPARATUS", which is incorporated herein by reference in its entirety.

### TECHNICAL FIELD

This application relates to the field of communication technologies, and more specifically, to a communication method and a communication apparatus.

### BACKGROUND

As a wireless local area network (wireless local area network, WLAN) has developed to date, 802.11, as one of current mainstream wireless access standards, has been widely commercially applied in the past decade. In many application scenarios, long-distance transmission of up to 1 kilometer to 2 kilometers needs to be performed between different devices. However, limited by laws and regulations, a sending device cannot use a very high power. Moreover, due to an uncertain radio channel condition, transmission of 1 kilometer to 2 kilometers cannot be directly performed between devices. A relay device may be used to relay a signal, to achieve long-distance transmission. Therefore, relay transmission is introduced in the 802.11ah standard.

In a current relay transmission solution, in a process of establishing a relay transmission procedure, information about the relay device is obtained through a high-frequency communication link, and the relay device is selected and established at a high frequency. Consequently, overheads are high. How to reduce overheads of establishing the relay transmission procedure becomes an urgent problem to be resolved.

### SUMMARY

This application provides a communication method, to reduce overheads of establishing a relay transmission procedure.

According to a first aspect, a communication method is provided. The method may be performed by a first multi-link device (multi-link device, MLD), or may be performed by a component (for example, a chip or a circuit) of the first MLD. This is not limited herein. For ease of description, the following provides descriptions by using an example in which the first MLD performs the method.

The communication method includes: A first multi-link device MLD obtains information about a first relay MLD through a first communication link. The first relay MLD is used to relay information transmitted by the first MLD to a second MLD through a second communication link. The first MLD sends a first request message to the first relay MLD and the second MLD through the first communication link. The first request message is used to request to establish a second communication link between the first MLD and the first relay MLD and a second communication link between the second MLD and the first relay MLD. A frequency band on which the first communication link operates is lower than a frequency band on which the second communication link operates.

Based on the foregoing technical solution, the first MLD, the first relay MLD, and the second MLD support the first communication link and the second communication link. The first communication link may be understood as a low-frequency (for example, a frequency band below 7 GHz) communication link, and the first communication link may be understood as a high-frequency (for example, a frequency band of 45 GHz and above) communication link. When the first MLD expects to transmit information to the second MLD through the first relay MLD on the second communication link, in this technical solution, the first MLD may obtain the information about the first relay MLD through the first communication link, and set the first relay MLD through the first communication link, so that the first relay MLD can establish the second communication links with the first MLD and the second MLD, to implement relay transmission. In this way, a low frequency assists a high frequency in relay transmission establishment, thereby reducing relay transmission establishment overheads and improving relay transmission performance.

With reference to the first aspect, in some implementations of the first aspect, that the first MLD obtains the information about the first relay MLD through the first communication link includes: The first MLD sends a second request message to a third MLD through the first communication link. The second request message is used to request to obtain information about at least one relay MLD that provides a relay service for the first MLD and the second MLD. The first MLD receives a second response message from the third MLD through the first communication link. The second response message includes the information about the at least one relay MLD, and the first relay MLD is one of the at least one relay MLD.

Based on the foregoing technical solution, the first MLD may obtain the information about the at least one relay MLD from the third MLD through the first communication link. The third MLD may be a personal basic service set control point (personal basic service set (PBSS) control point, PCP) MLD or an access point (Access Point, AP) MLD. The PCP/AP may obtain information about different MLDs in a system in an association procedure, and learn of a specific MLD with a relay service provision capability. Therefore, after receiving the second request message sent by the first MLD to request to obtain the relay MLD, the PCP/AP provides, for the second MLD through the first communication link, information about a relay MLD that may implement relay. In this technical solution, the first MLD may exchange a message with the PCP/AP on the first communication link, to obtain the information about the relay MLD, and does not need to obtain the information about the relay MLD through the second communication link. On the first communication link, the PCP/AP may provide the information about the relay MLD for the first MLD and the second MLD through omnidirectional transmission, thereby improving efficiency.

With reference to the first aspect, in some implementations of the first aspect, that the first MLD obtains the information about the first relay MLD through the first communication link includes: The first MLD receives a third request message from the first relay MLD through the first communication link. The third request message includes the information about the first relay MLD.

Based on the foregoing technical solution, if the first MLD is a PCP/AP in the system, the first MLD may obtain the information about different MLDs in the system in the association procedure, and learn of the specific MLD with the relay service provision capability, and does not need to obtain the information about the relay MLD from another MLD.

With reference to the first aspect, in some implementations of the first aspect, the method further includes: The first MLD receives a sounding physical layer protocol data unit from the first relay MLD through the first communication link; the first MLD measures, based on the sounding physical layer protocol data unit, first channel information between the first MLD and the first relay MLD that corresponds to the first communication link; and the first MLD receives second channel information from the second MLD. The second channel information is channel information between the second MLD and the first relay MLD that corresponds to the first communication link.

Based on the foregoing technical solution, the first MLD may receive, through the first communication link, the sounding physical layer protocol data unit sent by the first relay MLD to measure channel quality, and the second MLD may also receive, through the first communication link, the sounding physical layer protocol data unit sent by the first relay MLD to measure channel quality. Therefore, the first MLD may perform channel quality measurement between the first MLD and the first relay MLD based on the sounding physical layer protocol data unit to obtain the first channel information, the second MLD may perform channel quality measurement between the second MLD and the first relay MLD based on the sounding physical layer protocol data unit to obtain the second channel information, and the second MLD provides the measured second channel information to the first MLD through the first communication link, so that the first MLD can determine, based on the first channel information and the second channel information, that the first relay MLD is a relay MLD that meets a requirement. This helps the first MLD select the relay MLD based on channel quality of the first communication link. In addition, compared with selecting the relay MLD based on the second communication link, selecting the relay MLD based on the channel quality of the first communication link does not require beam training, thereby reducing overheads of selecting the relay MLD.

With reference to the first aspect, in some implementations of the first aspect, the method further includes: The first MLD sends a channel measurement request message to the first relay MLD and the second MLD through the first communication link. The channel measurement request message is used to request to obtain third channel information between the first MLD and the first relay MLD and fourth channel information between the second MLD and the first relay MLD that correspond to the second communication link. The first MLD receives the third channel information from the first relay MLD through the first communication link, and receives the fourth channel information from the second MLD through the first communication link.

Based on the foregoing technical solution, the first MLD may initiate, through the first communication link, a channel measurement request for measuring the second communication link, and receive the third channel information between the first relay MLD and the first MLD on the second communication link and the fourth channel information between the first relay MLD and the second MLD on the second communication link through the first communication link, so that the first MLD can determine, based on the third channel information and the fourth channel information, that the first relay MLD is a relay MLD that meets a requirement. This helps the first MLD select the relay MLD based on channel quality of the second communication link.

With reference to the first aspect, in some implementations of the first aspect, the method further includes: The first MLD receives information about a service period corresponding to the first relay MLD from the third MLD through the first communication link.

Based on the foregoing technical solution, the first MLD may receive, through the first communication link, information that is about a service period of the relay MLD and that is sent by the third MLD, so that the third MLD can provide, on the first communication link, the information about the service period of the relay MLD through omnidirectional transmission, thereby improving efficiency.

With reference to the first aspect, in some implementations of the first aspect, the method further includes: The first MLD allocates a service period corresponding to the first relay MLD to the first relay MLD; and the first MLD sends information about the service period corresponding to the first relay MLD to the first relay MLD through the first communication link.

Based on the foregoing technical solution, if the first MLD is a PCP/AP in the system, the first MLD may allocate the service period of the relay MLD, and provide the information about the service period of the relay MLD through the first communication link. In this way, the first MLD can provide, on the first communication link, the information about the service period of the relay MLD through omnidirectional transmission, thereby improving efficiency.

With reference to the first aspect, in some implementations of the first aspect, the method further includes: The first MLD determines a first service period corresponding to the first communication link and a second service period corresponding to the second communication link. The first MLD and the second MLD perform information transmission through the first communication link in the first service period, the first MLD and the first relay MLD perform information transmission in the second service period, and a difference between a start moment of the first service period and a start moment of the second service period is less than a first threshold.

Based on the foregoing technical solution, a service period corresponding to the first MLD may include the first service period corresponding to the first communication link and the second service period corresponding to the second communication link. In other words, the first MLD may transmit information through the first communication link and the second communication link, and the first communication link and the second communication link are coordinated, thereby improving transmission efficiency.

With reference to the first aspect, in some implementations of the first aspect, that the first MLD determines the first service period corresponding to the first communication link and the second service period corresponding to the second communication link includes: The first MLD allocates the first service period corresponding to the first communication link, and the second service period and a third service period that correspond to the second communication link. The method further includes: The first MLD sends information about the third service period to the second MLD and the first relay MLD through the first communication link. The second MLD and the first relay MLD perform information transmission in the third service period, and a difference between an end moment of the first service period and an end moment of the third service period is less than a second threshold.

With reference to the first aspect, in some implementations of the first aspect, the method further includes: The first MLD sends a notification message to the first relay MLD and the second MLD through the first communication link. The notification message indicates to end relay transmission, or the notification message indicates to switch a relay transmission mode.

According to a second aspect, a communication method is provided. The method may be performed by a first relay MLD, or may be performed by a component (for example, a chip or a circuit) of the first relay MLD. This is not limited. For ease of description, the following provides descriptions by using an example in which the first relay MLD performs the method.

The communication method includes: A first relay multi-link device MLD receives a first request message from a first MLD through a first communication link. The first request message is used to request to establish a second communication link between the first MLD and the first relay MLD and a second communication link between the second MLD and the first relay MLD, and the first relay MLD is used to relay information transmitted by the first MLD to the second MLD through a second communication link. The first relay MLD establishes the second communication link between the first MLD and the first relay MLD and the second communication link between the second MLD and the first relay MLD in response to the first request message. A frequency band on which the first communication link operates is lower than a frequency band on which the second communication link operates.

With reference to the second aspect, in some implementations of the second aspect, the method further includes: The first relay MLD sends a third request message to a third MLD through the first communication link. The third request message includes information about the first relay MLD.

With reference to the second aspect, in some implementations of the second aspect, the method further includes: The first relay MLD receives information about a service period of the first relay MLD through the first communication link. In the service period of the first relay MLD, the first relay MLD and the first MLD perform beamforming training, and the first relay MLD and the second MLD perform beamforming training.

With reference to the second aspect, in some implementations of the second aspect, the method further includes: The first relay MLD sends a sounding physical layer protocol data unit to the first MLD and the second MLD through the first communication link. The sounding physical layer protocol data unit is used to measure first channel information between the first MLD and the first relay MLD that corresponds to the first communication link, and measure second channel information between the second MLD and the first relay MLD that corresponds to the first communication link.

With reference to the second aspect, in some implementations of the second aspect, the method further includes: The first relay MLD receives a channel measurement request message from the first MLD through the first communication link. The channel measurement request message is used to request to obtain third channel information between the first MLD and the first relay MLD that corresponds to the second communication link. The first relay MLD sends a channel measurement response message to the first MLD through the first communication link. The channel measurement response message includes the third channel information.

With reference to the second aspect, in some implementations of the second aspect, the method further includes: The first relay MLD receives a notification message from the first MLD through the first communication link. The notification message indicates to end relay transmission, or the notification message indicates to switch a relay transmission mode.

For technical effects of the method shown in the second aspect and the possible designs of the second aspect, refer to the technical effects in the first aspect and the possible designs of the first aspect.

According to a third aspect, a communication method is provided. The method may be performed by a third MLD, or may be performed by a component (for example, a chip or a circuit) of the third MLD. This is not limited. For ease of description, the following provides descriptions by using an example in which the third MLD performs the method.

The communication method includes: A third relay multi-link device MLD receives at least one third request message from at least one relay MLD through a first communication link. The third request message includes information about the relay MLD. The third MLD receives a second request message from a first MLD through the first communication link. The second request message is used to request to obtain information about at least one relay MLD that relays information transmitted by the first MLD to a second MLD through a second communication link. The third MLD sends a second response message to the first MLD and the second MLD through the first communication link. The second response message includes the information about the at least one relay MLD. A frequency band on which the first communication link operates is lower than a frequency band on which the second communication link operates.

With reference to the third aspect, in some implementations of the third aspect, the method further includes: The third MLD sends first indication information to the first MLD, the second MLD, and the at least one relay MLD through the first communication link. The first indication information indicates a part or all of the first MLD, the second MLD, and the at least one relay MLD to perform channel measurement.

With reference to the third aspect, in some implementations of the third aspect, the method further includes: The third MLD sends second indication information to the first MLD, the second MLD, and the at least one relay MLD through the first communication link. The second indication information includes information about a service period of each of the at least one relay MLD.

With reference to the third aspect, in some implementations of the third aspect, the method further includes: The third MLD allocates a first service period corresponding to the first communication link, and a second service period and a third service period that correspond to the second communication link; and the third MLD sends information about the first service period and information about the second service period to the first MLD, and sends information about the third service period to the second MLD and the first relay MLD. The first MLD and the second MLD perform information transmission through the first communication link in the first service period, the first MLD and the first relay MLD perform information transmission in the second service period, the second MLD and the first relay MLD perform information transmission in the third service period, a difference between an end moment of the first service period and an end moment of the third service period is less than a second threshold, and a difference between a start moment of the first service period and a start moment of the second service period is less than a first threshold.

For technical effects of the method shown in the third aspect and the possible designs of the third aspect, refer to the technical effects in the first aspect and the possible designs of the first aspect.

According to a fourth aspect, a communication apparatus is provided. The apparatus is configured to perform the methods according to the first aspect to the third aspect. Specifically, the apparatus may include a unit and/or a module configured to perform the method according to any one of the foregoing implementations of the first aspect to the third aspect, for example, a processing unit and/or a communication unit.

In an implementation, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit in a communication apparatus. When the apparatus is the chip, the chip system, or the circuit used in the terminal device, the communication unit may be an input/output interface, an interface circuit, an output circuit, an input circuit, a pin, a related circuit, or the like on the chip, the chip system, or the circuit, and the processing unit may be at least one processor, processing circuit, logic circuit, or the like.

According to a fifth aspect, a communication apparatus is provided. The apparatus includes: a memory, configured to store a program; and at least one processor, configured to execute a computer program or instructions stored in the memory, to perform the method according to any one of the foregoing implementations of the first aspect to the third aspect.

According to a sixth aspect, this application provides a processor, configured to perform the methods according to the foregoing aspects.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to a seventh aspect, a computer-readable storage medium is provided. The computer-readable medium stores program code executed by a device, and the program code includes instructions for performing the method according to any one of the foregoing implementations of the first aspect to the third aspect.

According to an eighth aspect, a computer program product including instructions is provided. When the computer program product is run on a computer, the computer is caused to perform the method according to any one of the foregoing implementations of the first aspect to the third aspect.

According to a ninth aspect, a chip is provided. The chip includes a processor and a communication interface. The processor reads, through the communication interface, instructions stored in a memory, to perform the method according to any one of the foregoing implementations of the first aspect to the third aspect.

Optionally, in an implementation, the chip further includes the memory. The memory stores a computer program or the instructions. The processor is configured to execute the computer program or the instructions stored in the memory. When the computer program or the instructions are executed, the processor is configured to perform the method provided in any one of the implementations.

According to a fourteenth aspect, a communication system is provided, including the first MLD in the first aspect, the first relay MLD in the second aspect, and the third MLD in the third aspect.

### BRIEF DESCRIPTION OF DRAWINGS

FIG. 1 is a diagram of an application scenario to which an embodiment of this application is applicable;
FIG. 2 is a diagram of a structure of an apparatus;
FIG. 3 is a diagram of a structure of a multi-link device;
FIG. 4 is a diagram of a structure of a plurality of links between multi-link devices;
FIG. 5 is a diagram of a structure of a relay transmission topology;
FIG. 6 is a diagram of relay transmission;
FIG. 7 is a diagram of a system architecture of a relay transmission application;
FIG. 8 is a schematic flowchart of relay device discovery;
FIG. 9 is a schematic flowchart of relay device selection;
FIG. 10 is a schematic flowchart of relay device setup;
FIG. 11(a) to FIG. 11(d) are diagrams of scenarios to which a communication method is applicable according to an embodiment of this application;
FIG. 12 is a schematic flowchart of a communication method according to an embodiment of this application;
FIG. 13 is a diagram of obtaining information about a relay MLD according to an embodiment of this application;
(a) in FIG. 14 is another diagram of obtaining information about a relay MLD according to an embodiment of this application;

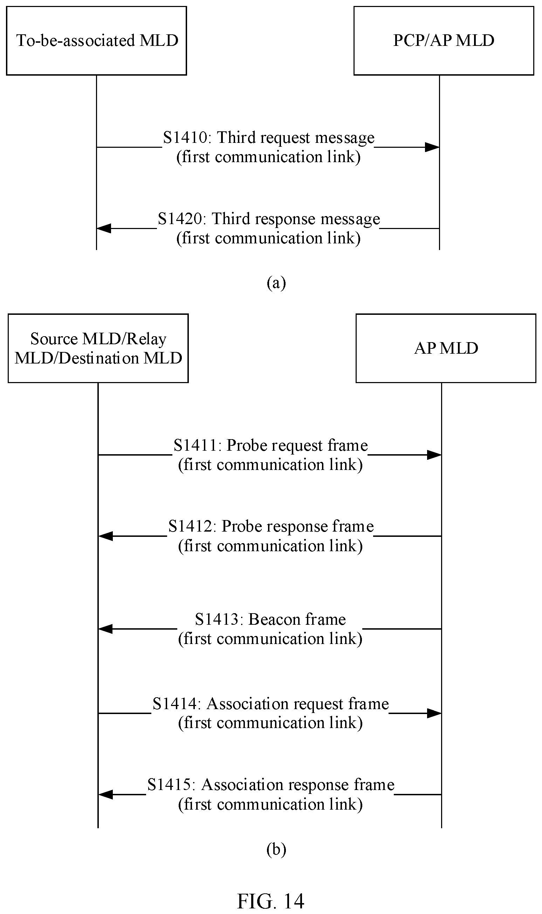

(b) in FIG. 14 is still another diagram of obtaining information about a relay MLD according to an embodiment of this application;

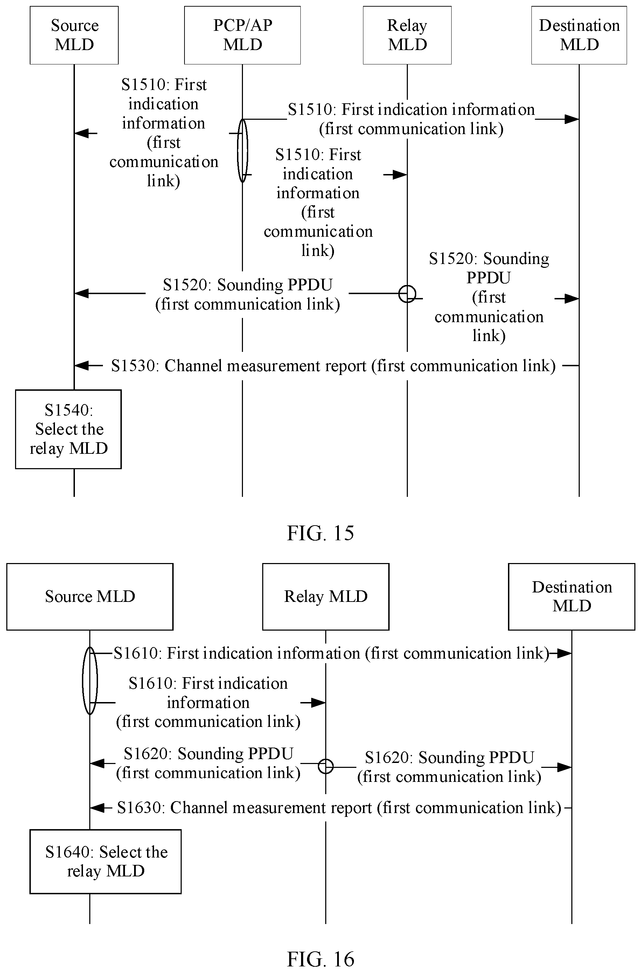

FIG. 15 is a diagram of selecting a relay MLD according to an embodiment of this application;
FIG. 16 is another diagram of selecting a relay MLD according to an embodiment of this application;

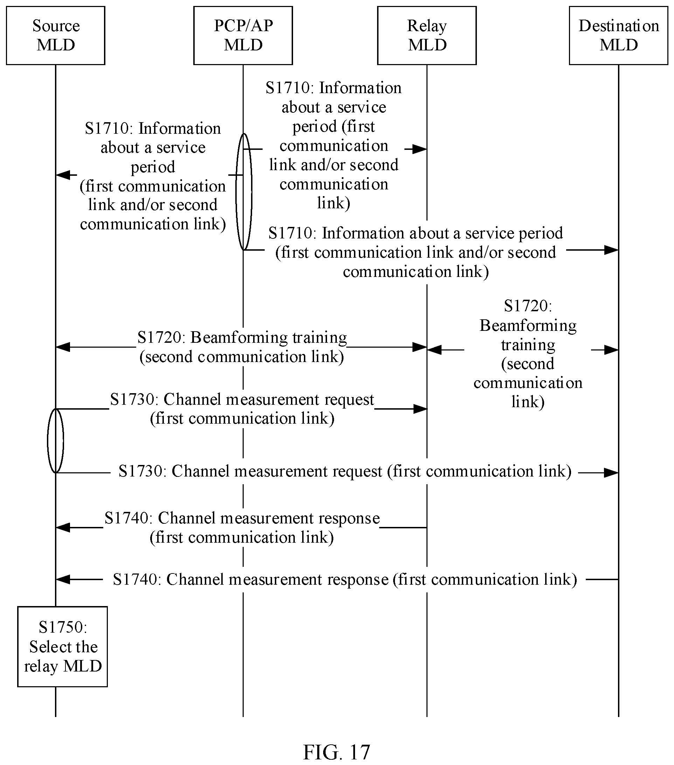

FIG. 17 is still another diagram of selecting a relay MLD according to an embodiment of this application;

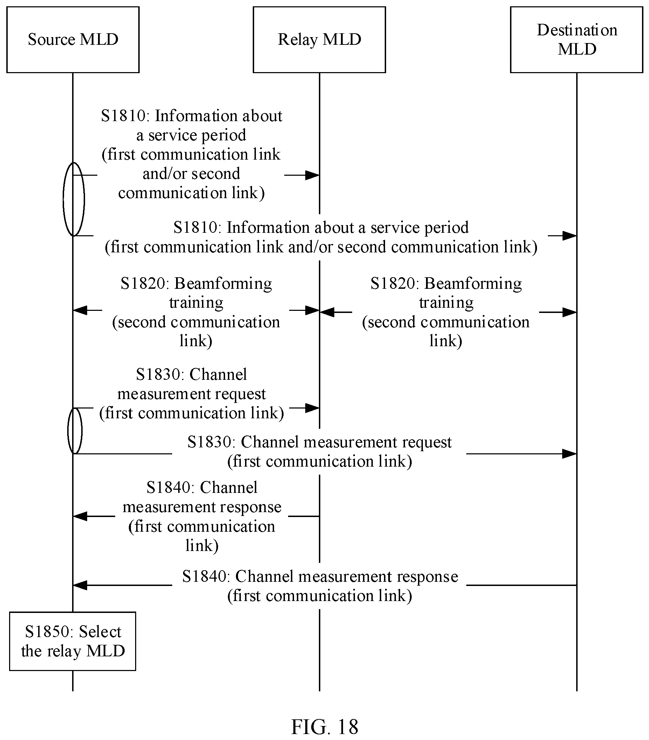

FIG. 18 is yet another diagram of selecting a relay MLD according to an embodiment of this application;

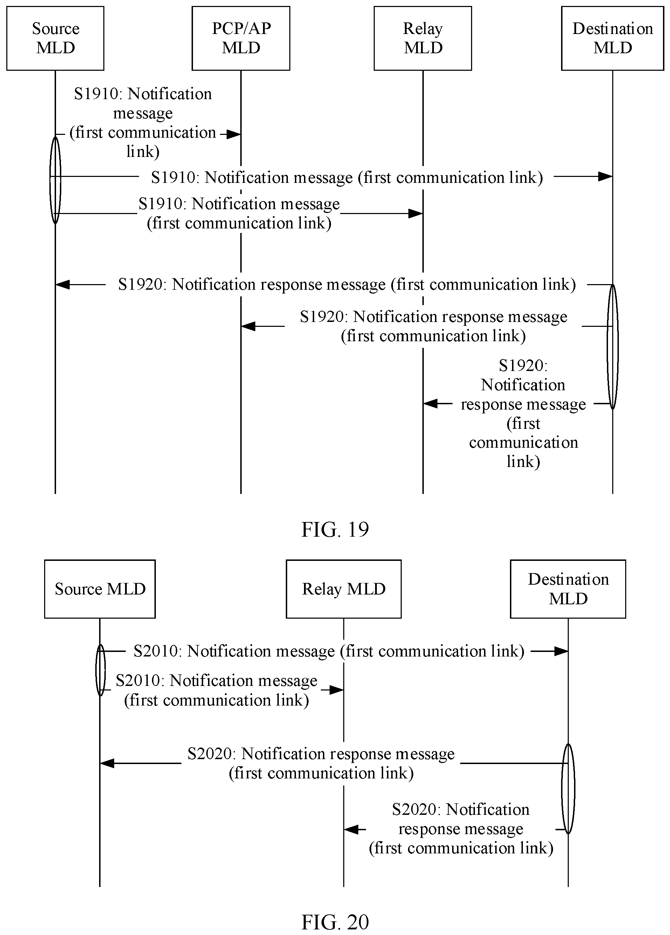

FIG. 19 is a diagram of indicating to end relay transmission or switch a relay transmission mode according to an embodiment of this application;
FIG. 20 is another diagram of indicating to end relay transmission or switch a relay transmission mode according to an embodiment of this application;

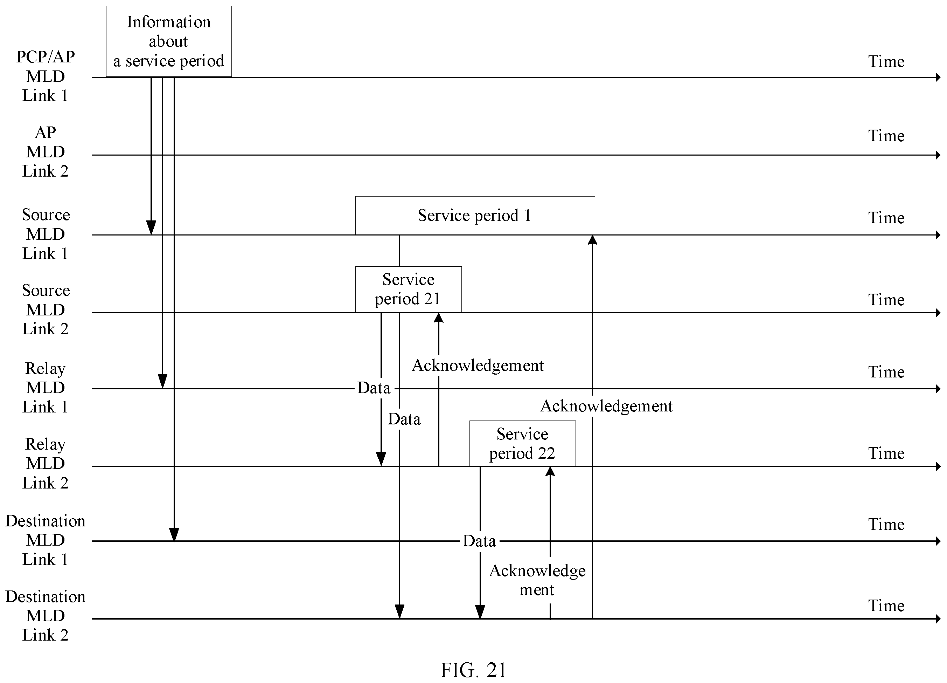

FIG. 21 is a diagram of service period configuration according to an embodiment of this application;

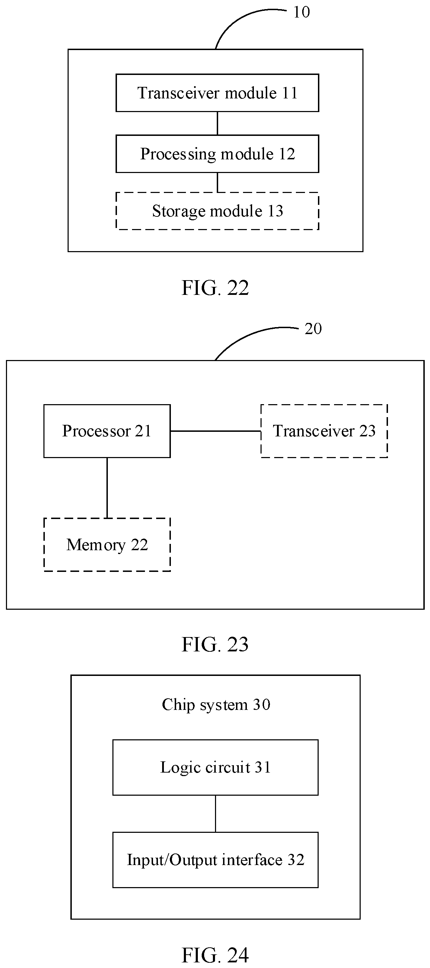

FIG. 22 is a block diagram of a communication apparatus according to an embodiment of this application;
FIG. 23 is a diagram of another communication apparatus according to an embodiment of this application; and
FIG. 24 is a diagram of a chip system according to an embodiment of this application.

### DESCRIPTION OF EMBODIMENTS

For ease of understanding of embodiments of this application, the following descriptions are provided first.

First, in this application, "indicate" may include "directly indicate" and "indirectly indicate". When a piece of indication information indicates A, the indication information may directly indicate A or indirectly indicate A, but it does not indicate that the indication information definitely carries A.

Information indicated by indication information is referred to as to-be-indicated information. In a specific implementation process, there are a plurality of manners of indicating the to-be-indicated information, for example, but not limited to, the following manners: The to-be-indicated information is directly indicated, for example, the to-be-indicated information or an index of the to-be-indicated information is indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of all pieces of information that is pre-agreed on (for example, stipulated in a protocol), to reduce indication overheads to some extent. In addition, a common part of all pieces of information may be identified and indicated in a unified manner, to reduce indication overheads caused by separately indicating same information.

Second, "at least one" shown in this application means one or more, and "a plurality of" means two or more. In addition, in embodiments of this application, "first", "second", and various numeric numbers (for example, "#1" and "#2") are merely used for distinguishing for ease of description, and are not used to limit the scope of embodiments of this application. Sequence numbers in the following processes do not mean an execution sequence. The execution sequence of the processes should be determined based on functions and internal logic of the processes, and should not constitute any limitation on implementation processes of embodiments of this application. It should be understood that objects described in this way may be interchangeable in proper cases, so that solutions other than embodiments of this application can be described. In addition, in embodiments of this application, the word like "S810" is merely an identifier for ease of description, and do not limit a sequence of performing steps.

Third, in embodiments of this application, terms such as "example" or "for example" are used to give an example, an illustration, or a description. Any embodiment or design scheme described as an "example" or "for example" in this application should not be explained as being more preferred or having more advantages than another embodiment or design scheme. To be precise, use of the word such as "example" or "for example" is intended to present a relative concept in a specific manner.

Fourth, "store" in embodiments of this application may be "stored in one or more memories". The one or more memories may be separately disposed, or may be integrated into an encoder, a decoder, a processor, or a communication apparatus. Alternatively, some of the one or more memories may be separately disposed, and some may be integrated into a decoder, a processor, or a communication apparatus. A type of the memory may be a storage medium in any form. This is not limited in this application.

Fifth, in embodiments of this application, a "protocol" may be a standard protocol in the communication field, for example, may include an NR protocol and a related protocol applied to a further communication system. This is not limited in this application.

Sixth, in embodiments of this application, terms "of (of)", "corresponding (corresponding, relevant)", "corresponding (corresponding)", and "associate (associate)" may be interchangeably used sometimes. It should be noted that meanings expressed by the terms are consistent when differences are not emphasized.

Seventh, in embodiments of this application, "in a case of", "when", and "if" may be used interchangeably sometimes. It should be noted that, when a difference between the terms is not emphasized, meanings to be expressed are consistent.

Eighth, a term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

The following describes technical solutions of this application with reference to accompanying drawings.

The technical solutions provided in embodiments of this application may be applied to a wireless local area network (wireless local area network, WLAN) scenario, for example, support related institute of electrical and electronics engineers (institute of electrical and electronics engineers, IEEE) 802.11 standards, such as the 802.11a/b/g standard, the 802.11n standard, the 802.11ac standard, the 802.11ax standard, and a next-generation Wi-Fi protocol of IEEE 802.11ax, for example, 802.11be, Wi-Fi 7, extremely high throughput (extremely high throughput, EHT), 802.11ad, 802.11ay, or 802.11bf, or for another example, a next generation of 802.11be like Wi-Fi 8; may be further applied to an ultra-wideband (ultra-wideband, UWB)-based wireless personal area network system, for example, 802.15 series standards; and may be further applied to a sensing (sensing) system, for example, 802.11bf series standards. The technical solutions can also be applied to a next-generation standard of IEEE 802.11be, for example, 802.11bn, the ultra-high reliability (Ultra High Reliability, UHR) task group. Transmission reliability is an important focus of UHR. In addition, on a millimeter-wave frequency band, the IEEE 802.11 standard group plans to establish an integrated millimeter wave (Integrated Millimeter Wave, IMMW) task group. The 802.11n standard is referred to as high throughput (high throughput, HT), the 802.11ac standard is referred to as a very high throughput (very high throughput, VHT) standard, the 802.11ax standard is referred to as a high efficiency (high efficiency, HE) standard, and the 802.11be standard is referred to as an extremely high throughput (extremely high throughput, EHT) standard. 802.11 bf includes two major categories of standards: a low-frequency (for example, sub-7 GHz) standard and a high-frequency (for example, 60 GHz) standard. An implementation of sub-7 GHz mainly depends on standards such as 802.11ac, 802.11ax, 802.11be, and a next-generation standard. An implementation of 60 GHz mainly depends on standards such as 802.11ad, 802.11ay, and a next-generation standard. 802.11ad may also be referred to as a directional multi-gigabit (directional multi-gigabit, DMG) standard, and 802.11ay may also be referred to as an enhanced directional multi-gigabit (enhanced directional multi-gigabit, EDMG) standard.

Although embodiments of this application are mainly described by using an example in which a WLAN network is deployed, especially a network to which the IEEE 802.11 system standards are applied, a person skilled in the art easily understands that various aspects in embodiments of this application may be extended to other networks that use various standards or protocols, for example, a high performance radio local area network (high performance radio local area network, HIPERLAN), a wireless wide area network (wireless wide area network, WWAN), a wireless personal area network (wireless personal area network, WPAN), or other networks that are known or developed in the future. Therefore, regardless of a used coverage area and a used wireless access protocol, the various aspects provided in embodiments of this application are applicable to any suitable wireless network.

The technical solutions in embodiments of this application may be further applied to various communication systems, for example, a WLAN communication system, a wireless fidelity (wireless fidelity, Wi-Fi) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system or a new radio (new radio, NR) system, a 6th generation (6th generation, 6G) system, an internet of things (internet of things, IoT), and a vehicle-to-everything (vehicle-to-x, V2X).

The foregoing communication systems to which this application is applicable are merely examples for description, and the communication systems to which this application is applicable are not limited thereto. Unified descriptions are provided herein, and are not described below again.

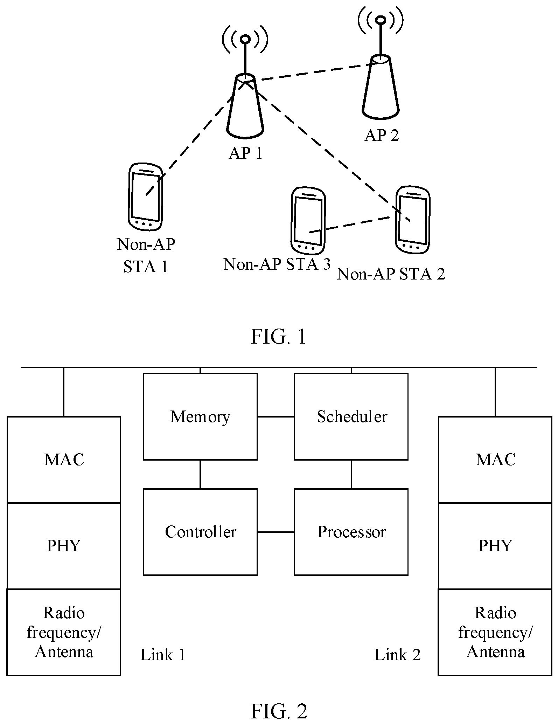

FIG. 1 is a diagram of an application scenario to which an embodiment of this application is applicable. As shown in FIG. 1, a communication method provided in this application is applicable to data communication between an access point (access point, AP) (an AP 1 and an AP 2 shown in FIG. 1) and a station (station, STA) (a non-AP STA 1, a non-AP STA 2, and a non-AP STA 3 shown in FIG. 1). The station may be a non-access point station (non-access point station, non-AP STA), which is referred to as a non-AP station or STA for short, and the AP may be referred to as an access station. Specifically, the solutions of this application are applicable to data communication between an AP and one or more non-AP stations (for example, data communication between an AP 1 and each of a non-AP STA 1 and a non-AP STA 2), and are also applicable to data communication between APs (for example, data communication between the AP 1 and an AP 2) and data communication between non-AP STAs (for example, data communication between the non-AP STA 2 and a non-AP STA 3).

The access point may be a node through which a terminal (for example, a mobile phone) accesses a wired (or wireless) network, and is mainly deployed at home, in a building, or on a campus, with a typical coverage radius ranging from tens of meters to more than 100 meters, or certainly, may be deployed outdoors. The access point is equivalent to a bridge that connects a wired network and a wireless network, and is mainly used to connect various wireless network clients together and then connect the wireless network to the Ethernet.

Specifically, the access point may be a terminal or a network device with a Wi-Fi chip. The network device may be a server, a router, a switch, a bridge, a computer, a mobile phone, a relay station, a vehicle-mounted device, a wearable device, a network device in a 5G network, a network device in a 6G network, a network device in a public land mobile network (public land mobile network, PLMN), or the like. This is not limited in this embodiment of this application. The access point may be a device that supports a Wi-Fi standard. For example, the access point may alternatively support one or more of the following IEEE 802.11 series standards: 802.11a, 802.11b, 802.11g, 802.11n, 802.11ac, 802.11ax, 802.11be, 802.11ad, and 802.11ay. For another example, the access point may alternatively support a next-generation standard of IEEE 802.11be, for example, a UHR task group involved in 802.11bn. Transmission reliability is an important focus of UHR. For another example, the access point may alternatively support a millimeter-wave frequency band. For example, the IEEE 802.11 standard group plans to establish an IMMW task group.

The non-AP station may be a wireless communication chip, a wireless sensor, a wireless communication terminal, or the like, and may also be referred to as a user, user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus. The non-AP station may be a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a compute device or another processing device connected to a wireless modem, a vehicle-mounted device, an internet of things device, a wearable device, a terminal device in a 5G network, a terminal device in a 6G network, a terminal device in a PLMN, or the like. This is not limited in this embodiment of this application. The non-AP station may be a device that supports a WLAN standard. For example, the non-AP station may support one or more of the following IEEE 802.11 series standards: 802.11a, 802.11b, 802.11g, 802.11n, 802.11ac, 802.11ax, 802.11be, 802.11ad, and 802.11ay. For another example, the non-AP station may alternatively support a next-generation standard of IEEE 802.11be, for example, a UHR task group involved in 802.11bn. Transmission reliability is an important focus of UHR. For another example, the non-AP station may alternatively support a millimeter-wave frequency band. For example, the IEEE 802.11 standard group plans to establish an IMMW task group.

For example, the non-AP station may be a mobile phone, a tablet computer, a set-top box, a smart television, a smart wearable device, a vehicle-mounted communication device, a computer, an internet of things (internet of things, IoT) node, a sensor, smart home, for example, a smart camera, a smart remote control, a smart water meter, or a sensor in smart city.

The AP or the non-AP station may include a transmitter, a receiver, a memory, a processor, and the like. The transmitter and the receiver are respectively configured to send and receive packet structures. The memory is configured to store signaling information, store a preset value that is pre-agreed-upon, and the like. The processor is configured to parse the signaling information, process related data, and the like.

For example, FIG. 2 shows a communication apparatus according to this application. The apparatus shown in FIG. 2 may be an AP or a non-AP station. A medium access control (medium access control, MAC) layer processing module, a physical (physical, PHY) layer processing module, radio frequency/an antenna, and the like are configured to implement related functions of the foregoing transmitter and receiver. As shown in FIG. 2, in addition to the MAC layer processing module, the PHY layer processing module, the radio frequency/antenna, a memory, and a processor, the apparatus may further include a controller and a scheduler.

It should be understood that FIG. 2 shows merely an example of an apparatus according to this application, and does not constitute a limitation on this application. For example, the apparatus may alternatively not include the controller and/or the scheduler.

For ease of understanding of the technical solutions in embodiments of this application, some terms or concepts that may be used in embodiments of this application are first briefly described.
1. Multi-link device (multi-link device, MLD): An IEEE 802.11 standard station device that simultaneously supports a plurality of links is referred to as a multi-link device (Multi-Link Device, MLD). An internal entity responsible for any link is referred to as a station (STA). If all STAs in an MLD are access points (Access Point, AP), the MLD may be further referred to as an AP MLD; or if all STAs in an MLD are non-AP STAs, the MLD may be further referred to as a non-AP MLD. In the IEEE 802.11be protocol, the MLD supports a multi-link operation technology. If receiving and sending may be separately performed on different links at a same time point (for example, the multi-link device includes two links; and in a same time period, one link may be used to send a signal, and the other link may be used to receive a signal), this mode is referred to as a simultaneously transmitting and receiving (simultaneously transmitting and receiving, STR) mode. If only receiving or sending can be performed on different links simultaneously (for example, the multi-link device includes two links, and the two links can only be used to send a signal in a same time period, or the two links can only be used to receive a signal in a same time period), the mode is referred to as a non-simultaneously transmitting and receiving (non-simultaneously transmitting and receiving, NSTR) mode. The solutions provided in embodiments of this application are applicable to the STR mode, and are also applicable to the NSTR mode.

The MLD has a plurality of radio frequency modules, and may operate on different frequency bands. For example, a frequency band on which the MLD operates may be, for example, all or a part of a millimeter-wave frequency band of 2.4 GHz, 5 GHz, 6 GHz, or 45 GHz and above. The MLD may include an AP MLD and/or a non-access point (non-AP) MLD. For example, the non-AP MLD may be a STA MLD.

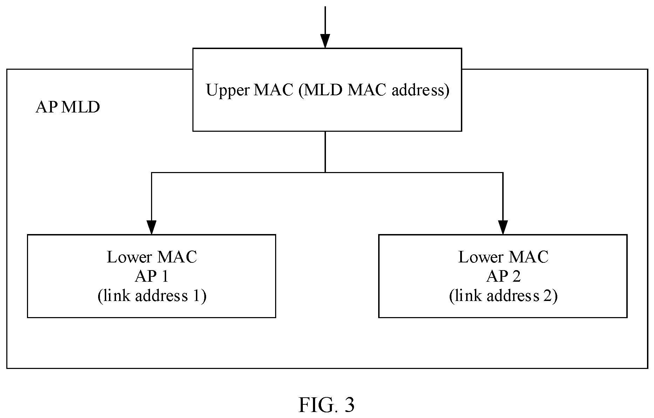

The AP MLD is used as an example. The AP MLD may include one or more affiliated (affiliated) stations, and each affiliated station has a respective media access control (media access control, MAC) address (address). FIG. 3 is an example of a diagram of a structure of a multi-link device according to an embodiment of this application. As shown in FIG. 3, the affiliated station of the AP MLD includes an AP 1 and an AP 2, a lower (lower) MAC address of the AP 1 is a link address 1, and a lower MAC address of the AP 2 is a link address 2. In addition, the AP MLD has an upper (upper) MAC address, which is referred to as an MLD MAC address.

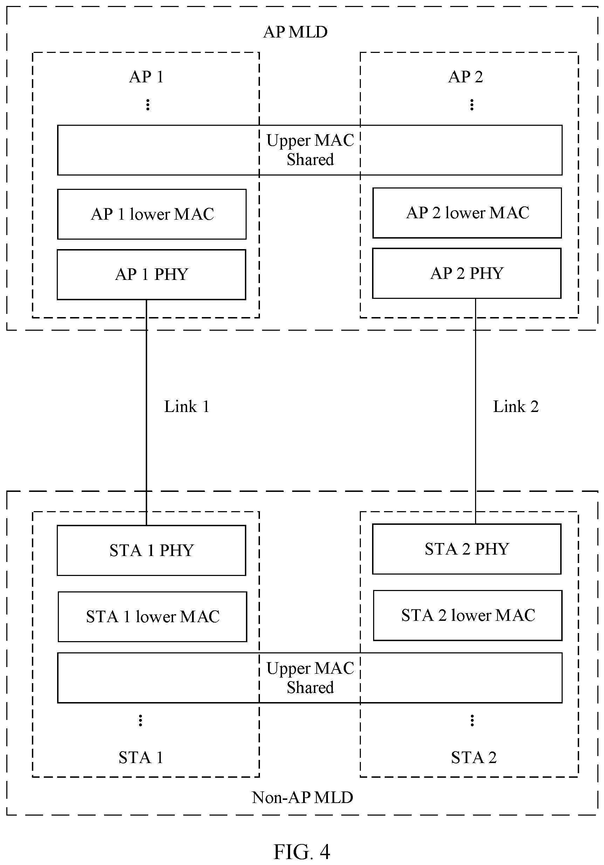

The AP MLD and the non-AP MLD may exchange signaling on any link, to establish a multi-link connection. FIG. 4 is an example of a diagram of a structure of a plurality of links between multi-link devices according to an embodiment of this application. As shown in FIG. 4, the AP MLD includes the AP 1 and the AP 2. The AP 1 includes an AP 1 PHY, AP 1 lower MAC, and upper MAC. The AP 2 includes an AP 2 PHY, AP 2 lower MAC, and the upper MAC. The AP 1 and the AP 2 share the upper MAC. The non-AP MLD includes a STA 1 and a STA 2. The STA 1 includes a STA 1 PHY, STA 1 lower MAC, and upper MAC. The STA 2 includes a STA 2 PHY, STA 2 lower MAC, and the upper MAC. The STA 1 and the STA 2 share the upper MAC, the AP 1 and the STA 1 are connected through a link 1, and the AP 2 and the STA 2 are connected through a link 2.

2. Multi-link operation (Multi-Link Operation, MLO): Continuously improving a throughput is a continuous technical objective of WLAN development and evolution. A protocol of a WLAN system is mainly discussed in the 802.11 standard group. In previous standards such as 802.11a/b/g/n/ac/ax, the throughput is continuously improved. The currently discussed 802.11be standard is referred to as extremely high throughput (Extremely High Throughput, EHT), and significantly improving a peak throughput is a most important technical objective. In a next-generation standard (for example, 802.11bn) of 802.11be, there is an ultra-high reliability (Ultra High Reliability, UHR) task group, and transmission reliability is an important focus of UHR. In addition, on a millimeter-wave frequency band, the 802.11 standard group plans to establish an integrated millimeter wave (Integrated Millimeter Wave, IMMW) task group.

Specifically, to achieve a technical objective of extremely high throughput, the 802.11be standard uses a multi-link operation (Multi-Link Operation, MLO) as one of key technologies. A core idea of the multi-link operation is that a WLAN device that supports the 802.11 standard has a plurality of links, in other words, a capability of performing sending and receiving on a plurality of frequency bands (Multi-band). In this way, data transmission can be performed on a larger bandwidth, thereby significantly improving the throughput. The plurality of frequency bands include but are not limited to Wi-Fi frequency bands such as a 2.4 GHz Wi-Fi frequency band, a 5 GHz Wi-Fi frequency band, and a 6 GHz Wi-Fi frequency band. Access and transmission performed on each frequency band are referred to as one link, or access and transmission performed on a frequency range on a same frequency band are referred to as one link. Therefore, access and transmission including a plurality of links are referred to as an MLO.

3. Long-distance transmission and relay: In many application scenarios, long-distance transmission of up to 1 kilometer to 2 kilometers needs to be performed between different nodes, for example, smart grid and highway traffic monitoring. However, limited by laws and regulations, a sending node cannot use a very high power. Due to an uncertain radio channel condition, transmission of 1 kilometer to 2 kilometers cannot be directly performed between nodes. In this case, a relay node needs to be used to relay a signal, to achieve long-distance transmission.

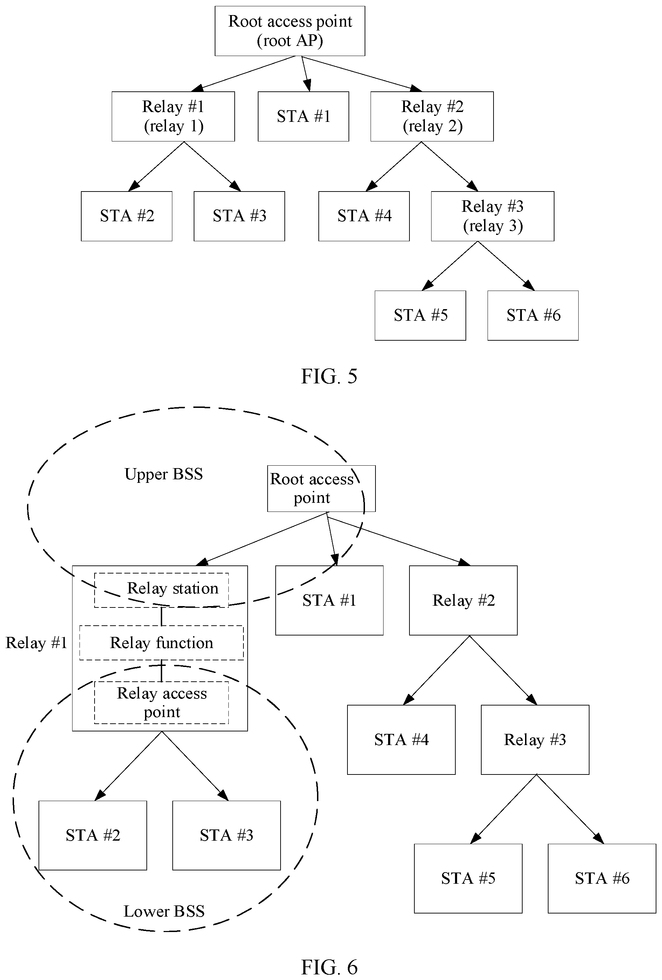

In the 802.11ah standard, relay transmission is introduced, and a topology of the relay transmission may be shown in FIG. 5. There are a total of three types of nodes: a root access point (Root Access Point, Root AP) (a root access point shown in FIG. 5), a relay (Relay) (a relay #1, a relay #2, and a relay #3 shown in FIG. 5), and a station (Station, STA) (a station #1, a station #2, a station #3, a station #4, a station #5, and a station #6 shown in FIG. 5). Some STAs are directly associated with the root AP (for example, as shown in FIG. 5, the station #1 is associated with the root AP), and some STAs are associated with a relay (for example, as shown in FIG. 5, the station #2 and the station #3 are associated with the relay #1, the station #4 is associated with the relay #2, and the station #5 and the station #6 are associated with the relay #3). In addition, a relay may be associated with a relay (for example, as shown in FIG. 5, the relay #3 is associated with the relay #1), to form a plurality of levels of relays.

The relay includes three parts: a relay station (relay STA), a relay function (relay function), and a relay access point (relay AP), as shown in FIG. 6. The relay STA, as a node in an upper basic service set (Basic Service Set, BSS), performs transmission communication with the root AP or an upper relay, and the relay AP, as a node of a lower BSS, performs transmission communication with a relay or a STA associated with the relay AP. The relay function functions as a bridge between the relay STA and the relay AP, and is connected to a logical link layer, to implement a function of the relay.

In addition to increasing a coverage distance, channel quality of each hop may be improved by using a plurality of hops, thereby improving a transmission rate and improving an overall throughput. This is another advantage of relay transmission. In addition, because a millimeter-wave frequency band is easily blocked by an obstacle, providing a secondary link through relay transmission is a third advantage of relay transmission.

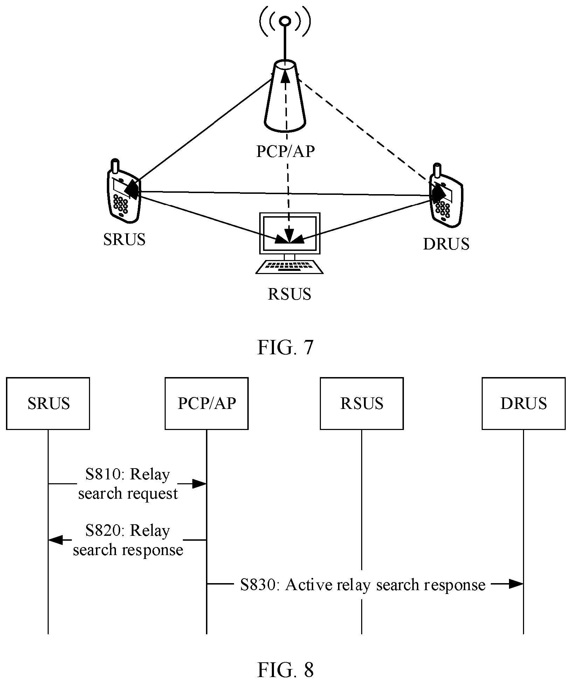

4. Establishment of a relay transmission procedure: The 802.11ad standard defines a manner of establishing a relay transmission procedure on a millimeter-wave frequency band. Specifically, FIG. 7 is a diagram of system architecture of a relay transmission application, including a personal basic service set control point (personal basic service set (PBSS) control point, PCP) or an access point (PCP/AP shown in FIG. 7), a source relay usable millimeter-wave station (source relay usable mSTA, SRUS) (SRUS shown in FIG. 7), a relay supportable millimeter-wave station (relay supportable mSTA, RSUS) (RSUS shown in FIG. 7), and a destination relay usable millimeter-wave station (destination relay usable mSTA, DRUS) (DRUS shown in FIG. 7). The SRUS may be briefly referred to as a source station, the RSUS may be briefly referred to as a relay, and the DRUS may be briefly referred to as a destination station.

It should be understood that a name of the station is not limited in this application, provided that a corresponding function can be implemented.

For example, establishment of the relay transmission procedure on the millimeter-wave frequency band includes the following phases:

### Phase 1: Relay device discovery.

For ease of understanding, the following describes in detail a relay device discovery procedure with reference to FIG. 8.

As shown in FIG. 8, relay capability exchange and relay device discovery include the following steps.

S810: The SRUS sends a relay search request to the PCP/AP.

Specifically, the relay search request is used to request the PCP/AP to provide information about a usable relay.

S820: The PCP/AP sends a relay search response to the SRUS.

Specifically, the relay search response responds to the relay search request, and the relay search response includes a relay list.

S830: The PCP/AP sends an active relay search response to the DRUS.

The active relay search response is used to notify the DRUS that the procedure is used to discover a relay.

### Phase 2: Relay device selection procedure.

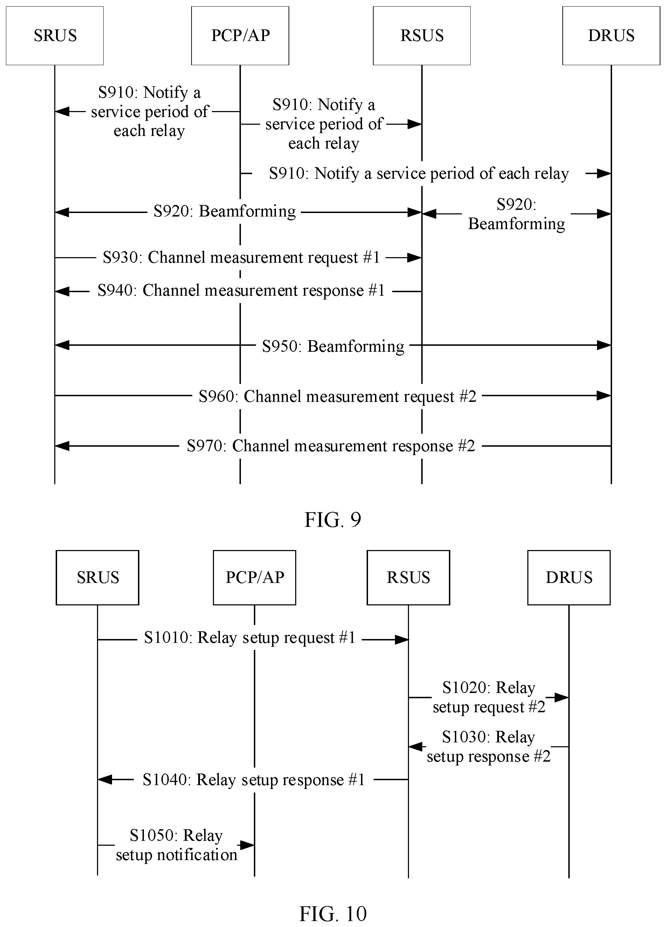

For ease of understanding, the following describes in detail a relay selection procedure with reference to FIG. 9.

As shown in FIG. 9, relay selection includes the following steps.

S910: The PCP/AP allocates a service period (Service Period, SP) to each relay.

For example, the PCP/AP may allocate a service period to each relay through omnidirectional broadcast. Omnidirectional broadcast may be understood as that the PCP/AP simultaneously allocates a service period to each relay.

### S920: Beamforming.

Each relay separately performs beamforming (Beamforming, BF) processing, namely, beamforming training, with the destination station and the source station in a corresponding SP.

S930: The SRUS sends a channel measurement request #1 to the relay.

Specifically, the source station sends the channel measurement request #1 to one or more candidate relays, to obtain channel measurement information between the source station and the relay.

S940: The relay sends a channel measurement response #1 to the SRUS.

The channel measurement response #1 includes the channel measurement information between the source station and the relay.

It should be understood that the relay shown in FIG. 9 may be any one of the one or more candidate relays. The SRUS may send a channel measurement request to another candidate relay, so that the source station may obtain channel measurement information between the source station and the one or more candidate relays.

S950: The SRUS and the DRUS perform beamforming processing.

S960: The SRUS sends a channel measurement request #2 to the DRUS.

The source station sends a channel measurement request to the destination station, to collect channel measurement information that is known by the destination station and that is between the destination station and a relay device that is known by the destination station.

S970: The DRUS sends a channel measurement response #2 to the SRUS.

The channel measurement response includes the channel measurement information between the destination station and the relay device known by the destination station.

Further, the source station selects a relay. A selection principle of the relay depends on an implementation, and may depend on capability information of the relay and channel quality.

### Phase 3: Relay device setup (Relay setup)

For ease of understanding, the following describes in detail a relay setup procedure with reference to FIG. 10.

As shown in FIG. 10, the relay setup includes the following steps.

S1010: The SRUS sends a relay setup request #1 to the RSUS.

The relay setup request includes information about the SRUS, information about the DRUS, a capability and identification information of the relay, a relay transmission parameter, and the like.

S1020: The RSUS sends a relay setup request #2 to the DRUS.

The RSUS forwards, to the DRUS by using the relay setup request #2, information carried in the received relay setup request #1.

S1030: The DRUS sends a relay setup response #2 to the RSUS.

S1040: The RSUS sends a relay setup response #1 to the SRUS.

S1050: The SRUS sends a relay setup notification to the PCP/AP.

The relay setup notification includes information indicating that the relay setup succeeds.

With reference to FIG. 1, the foregoing briefly describes a scenario to which a communication method provided in embodiments of this application can be applied, describes a basic concept that may be used in embodiments of this application, and describes, in the basic concept, three phases included in a current relay establishment procedure. It can be learned from the foregoing that in the relay device selection procedure, the PCP/AP notifies a service period of each relay device through omnidirectional broadcast, and does not perform beamforming at a transmitter. When a next-generation standard does not support a robust physical layer protocol data unit (Physical Layer Protocol Data Unit, PPDU), the PCP/AP may be unable to notify the service period of each relay device to a surrounding device in the foregoing manner. In addition, in a relay device selection process, a large amount of beamforming processing needs to be performed, and a large amount of time needs to be consumed.

To resolve a problem existing in the foregoing relay establishment procedure, this application provides a communication method, to reduce overheads of establishing a relay transmission procedure.

The following describes the technical solutions provided in this application in detail with reference to accompanying drawings. Embodiments of this application may be applied to a plurality of different scenarios, including but not limited to the scenario shown in FIG. 1.

It should be understood that a specific structure of an execution body of the method provided in embodiments of this application is not particularly limited in the following embodiments, provided that a program that records code of the method provided in embodiments of this application can be run to perform communication according to the method provided in embodiments of this application. For example, the execution body of the method provided in embodiments of this application may be a receiver device or a transmitter device, or a functional module that is in the receiver device or the transmitter device and that can invoke the program and execute the program.

In this application, a device in the following embodiments is a multi-link device (referred to as an MLD), and a plurality of links may be established between two MLDs. For example, a first communication link and a second communication link may be established between a multi-link device #1 and a multi-link device #2. The first communication link is a low-frequency communication link (for example, the first communication link operates (operation) on a frequency band (frequency band) below 7 GHz). The second communication link is a high-frequency communication link (for example, the second communication link operates on a frequency band of 45 GHz or above). In addition, it is assumed that MLDs may directly communicate with each other on the first communication link without a relay operation.

For example, in the following embodiment, relay transmission may be performed between a first MLD and a second MLD on the second communication link through a first relay MLD. The first MLD may be understood as a source MLD, and the second MLD may be understood as a destination MLD; or the first MLD is understood as a destination MLD, and the second MLD is understood as a source MLD.

For ease of understanding, the following describes, by using an example in which the first MLD is a source MLD and the second MLD is a destination MLD, a scenario to which the following embodiments are applicable.

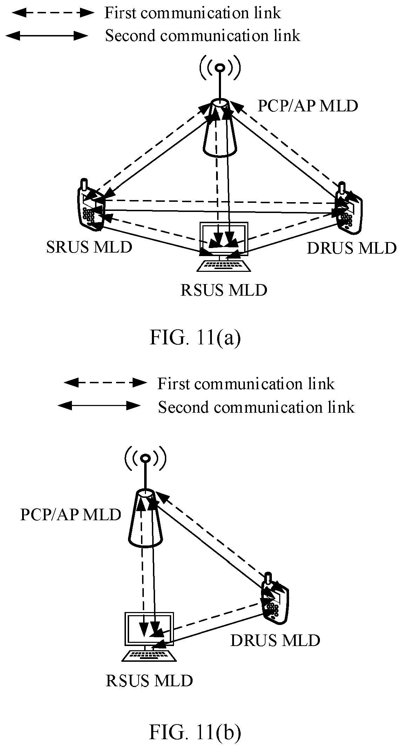

FIG. 11(a) to FIG. 11(d) are possible diagrams of a scenario including an MLD in the following embodiments.

It can be learned from FIG. 11(a) that a scenario includes a PCP/AP MLD, an SRUS MLD, an RSUS MLD, and a DRUS MLD, which is equivalent to the diagram of the system architecture of the relay transmission in FIG. 7. Relay transmission may also be implemented in the scenario shown in FIG. 11(a). A specific relay transmission establishment process is described below. Details are not described herein again.

It can be learned from FIG. 11(b) that a scenario includes a PCP/AP MLD, an RSUS MLD, and a DRUS MLD. In the scenario shown in FIG. 11(b), an SRUS MLD is the PCP/AP MLD. In other words, the PCP/AP MLD may implement a function of the SRUS MLD. Therefore, relay transmission may also be implemented in the scenario shown in FIG. 11(b). A specific relay transmission establishment process is described below. Details are not described herein.

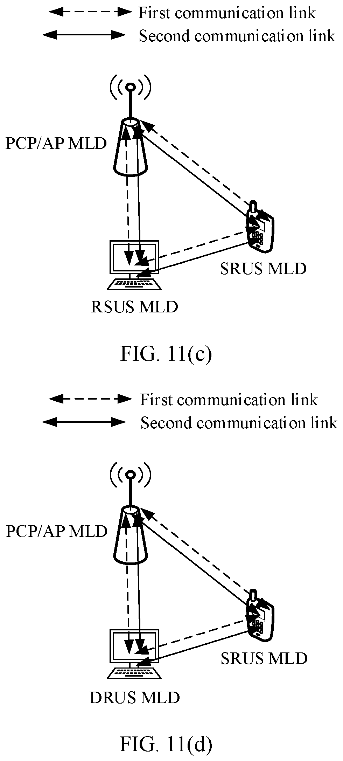

It can be learned from FIG. 11(c) that a scenario includes a PCP/AP MLD, an RSUS MLD, and an SRUS MLD. In the scenario shown in FIG. 11(c), a DRUS MLD is the PCP/AP MLD. In other words, the PCP/AP MLD may implement a function of the DRUS MLD. Therefore, relay transmission may also be implemented in the scenario shown in FIG. 11(c). A specific relay transmission establishment process is described below. Details are not described herein.

It can be learned from FIG. 11(d) that a scenario includes a PCP/AP MLD, a DRUS MLD, and an SRUS MLD. In the scenario shown in FIG. 11(d), an RSUS MLD is the PCP/AP MLD. In other words, the PCP/AP MLD may implement a function of the RSUS MLD. Therefore, relay transmission may also be implemented in the scenario shown in FIG. 11(d). A specific relay transmission establishment process is described below. Details are not described herein.

It can be learned from (a) to FIG. 11(d) that, the following embodiments may be applied to a scenario in which the multi-link device performs relay transmission establishment, and the PCP/AP MLD may be one of the SRUS MLD, the RSUS MLD, and the DRUS MLD.

It should be understood that (a) to FIG. 11(d) are merely examples of scenarios to which the following embodiments can be applied, and do not constitute any limitation on the protection scope of this application. In addition, names of devices in (a) to FIG. 11(d) are merely examples, and do not constitute any limitation. The names of the devices are not limited in this application, and all devices that can implement corresponding functions fall within the protection scope of this application.

It should be noted that, the first communication link and the second communication link in the embodiments are general, and are not specific links. The first communication link is understood as a low-frequency communication link. In other words, all low-frequency communication links between different MLDs may be referred to as the first communication link (for example, in FIG. 11(a), there is a first communication link between the PCP/AP MLD, the SRUS MLD, the RSUS MLD, and the DRUS MLD, but a first communication link between the PCP/AP MLD and the SRUS MLD, a first communication link between the PCP/AP MLD and the RSUS MLD, and a first communication link between the PCP/AP MLD and the DRUS MLD are actually different first communication links). The second communication link is understood as a high-frequency communication link. In other words, all high-frequency communication links between different MLDs may be referred to as the second communication link (for example, in FIG. 11(a), there is a second communication link between the PCP/AP MLD, the SRUS MLD, the RSUS MLD, and the DRUS MLD, but a second communication link between the PCP/AP MLD and the SRUS MLD, a second communication link between the PCP/AP MLD and the RSUS MLD, and a second communication link between the PCP/AP MLD and the DRUS MLD are actually different second communication links).

Without a loss of generality, the following describes in detail the communication method provided in embodiments of this application by using interaction between the first MLD, the first relay MLD, and the second MLD as an example. In embodiments of this application, the first MLD, the first relay MLD, and the second MLD may be access points APs or chip systems inside the APs; or the first MLD, the first relay MLD, and the second MLD may be non-APs (for example, STAs) or chip systems inside the non-APs. The following does not set any limitation on specific forms of the first MLD, the first relay MLD, and the second MLD, and all devices that can implement corresponding functions of the first MLD, the first relay MLD, and the second MLD fall within the protection scope of this application.

For ease of description, an example in which the first MLD is a source MLD, the second MLD is a destination MLD, and the first relay MLD is one of at least one relay MLD that may perform relay transmission between the first MLD and the second MLD is used for description in the embodiments.

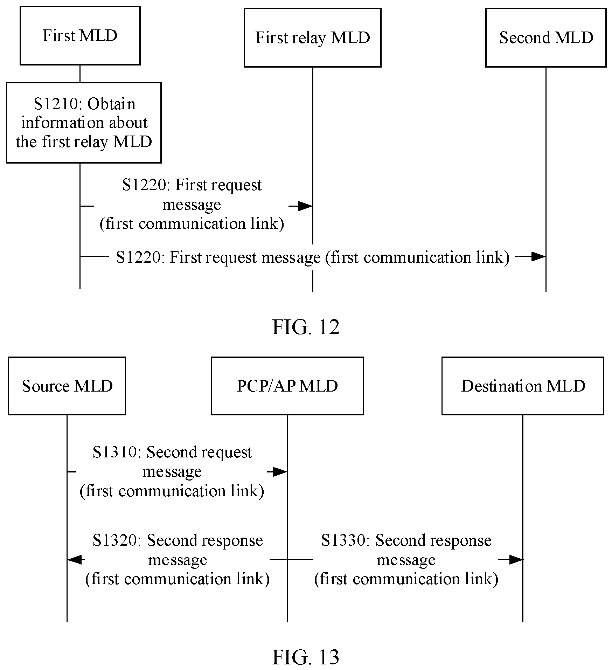

FIG. 12 is a schematic flowchart of a communication method according to an embodiment of this application. The method includes the following steps.

S1210: A first MLD obtains information about a first relay MLD.

Specifically, the first MLD obtains the information about the first relay MLD through a first communication link. The first relay MLD is used to relay (in other words, relay transmission, forwarding, transferring, or the like) information transmitted by the first MLD to a second MLD through a second communication link.

It should be understood that, in this embodiment, the first MLD, the first relay MLD, and the second MLD all support the first communication link and the second communication link. When the first MLD sends the information to the second MLD through the second communication link, the first MLD may transmit, to the first relay MLD through a second communication link, the information that needs to be sent to the second MLD, and the first relay MLD forwards the information to the second MLD through a second communication link. Therefore, the first relay MLD serves as a relay device between the first MLD and the second MLD. The following describes, with reference to a specific example, how to establish a relay transmission manner between the first MLD, the first relay MLD, and the second MLD.

For example, in this embodiment, that the first MLD obtains the information about the first relay MLD includes the following two possible implementations:
Manner 1: The first MLD is a source MLD, and a third MLD (namely, the foregoing PCP/AP, where in this embodiment, the PCP/AP also supports the first communication link and the second communication link, and therefore, in this embodiment, the PCP/AP is referred to as a PCP/AP MLD) exists in a system. In the scenario shown in FIG. 11(a), the first MLD may obtain the information about the first relay MLD from the third MLD. For example, the first MLD receives information about at least one relay MLD from the PCP/AP MLD, and the first relay MLD is one of the at least one relay MLD. With reference to FIG. 13, the following describes in detail how the first MLD obtains the information about the first relay MLD in the case shown in Manner 1. Details are not described herein again.
Manner 2: The first MLD is a source MLD, and the source MLD is the foregoing PCP/AP MLD. In the scenario shown in FIG. 11(b), the first MLD may obtain the information about the first relay MLD in an MLD association or probe procedure. For example, the at least one relay MLD in the system separately sends an association request frame or a probe request frame to the first MLD. The association request frame or the probe request frame carries information about a relay MLD. With reference to FIG. 14, the following describes in detail how the first MLD obtains the information about the first relay MLD in the case shown in Manner 2. Details are not described herein again.

It can be learned from the foregoing that, in a process of obtaining the relay MLD, the first MLD may obtain the information about the at least one relay MLD. The at least one relay MLD may be referred to as a candidate relay MLD. In other words, the first MLD may transmit information to the second MLD through any one of the at least one relay MLD on the second communication link.

To improve communication performance, the first MLD may select a part or all of the at least one relay MLD as a relay device that actually relays the information transmitted between the first MLD and the second MLD. For example, the first relay MLD is a relay MLD selected by the first MLD from the at least one relay MLD. In other words, the first relay MLD is one of a plurality of candidate relay MLDs.

Specifically, in this embodiment, that the first MLD performs relay MLD selection includes the following two possible implementations:
In a possible implementation, the first MLD may perform preliminary relay MLD selection based on channel quality corresponding to the first communication link.

For example, the first MLD receives a sounding PPDU from the first relay MLD through the first communication link, and measures, based on the sounding PPDU, first channel information between the first MLD and the first relay MLD that corresponds to the first communication link. The second MLD receives the sounding PPDU from the first relay MLD through the first communication link, measures, based on the sounding PPDU, second channel information between the second MLD and the first relay MLD that corresponds to the first communication link, and sends the second channel information to the first MLD through the first communication link. Therefore, the first MDL can determine, based on channel information between the first MLD and the first relay MLD and channel information between the second MLD and the first relay MLD on the first communication link, whether the first relay MLD may serve as a relay MLD that relays the information between the first MLD and the second MLD on the second communication link.

With reference to FIG. 15 and FIG. 16, the following describes in detail a specific process in which the first MLD selects the relay MLD in this implementation.

In another possible implementation, the first MLD may perform relay MLD selection based on channel quality corresponding to the second communication link.

For example, the first MLD sends a channel measurement request message to the first relay MLD and the second MLD through the first communication link, and the first MLD measures third channel information between the first MLD and the first relay MLD on the second communication link in response to the channel measurement request message, and sends the third channel information to the first MLD through the first communication link. The second MLD measures fourth channel information between the second MLD and the first relay MLD on the second communication link in response to the channel measurement request message, and sends the fourth channel information to the first MLD through the first communication link. Therefore, the first MDL can determine, based on channel information between the first MLD and the first relay MLD and channel information between the second MLD and the first relay MLD on the second communication link, whether the first relay MLD may serve as a relay MLD that relays the information between the first MLD and the second MLD on the second communication link.

With reference to FIG. 17 and FIG. 18, the following describes in detail a procedure in which the first MLD selects the relay MLD in this implementation.

It should be understood that, in this embodiment, an example in which the relay MLD selected by the first MLD is the first relay MLD is used for description. The first MLD may implement relay MLD setup based on a relay setup request message. In this case, a procedure of the method shown in FIG. 12 further includes the following steps.

S1220: The first MLD sends a first request message to the first relay MLD and the second MLD.

Specifically, the first MLD sends the first request message to the first relay MLD and the second MLD through the first communication link. The first request message includes information about the first MLD, information about the second MLD, and information about the first relay MLD.

For the first relay MLD, the first request message is used to request the first relay MLD to establish the second communication link between the first MLD and the first relay MLD, and the first request message is used to request the first relay MLD to establish the second communication link between the second MLD and the first relay MLD.

For the second MLD, the first request message is used to request the second MLD to establish the second communication link between the second MLD and the first relay MLD.

Optionally, after the first relay MLD and the second MLD establish the second communication link in response to the first request message, the first relay MLD and the second MLD may notify, based on a first response message, the first MLD that relay setup is completed.

For example, the first request message may be referred to as a relay setup request message. The first response message may be referred to as a relay setup response message.

For example, the first MLD may further send a notification message on the first communication link. The notification message indicates to end relay transmission, or the notification message indicates to switch a relay transmission mode. The relay transmission mode includes a switching mode or a cooperation mode.

For example, the notification message indicates the first relay MLD and/or the second MLD to terminate a relay operation on the second communication link. For another example, the notification message notifies the first relay MLD and/or the second MLD to switch the relay transmission mode.

With reference to FIG. 19 and FIG. 20, the following describes in detail how the first MLD indicates, based on the notification message, to end relay transmission or switch the relay transmission mode.

By way of example but not limitation, because all of the first MLD, the first relay MLD, and the second MLD support the first communication link and the second communication link, a possible transmission manner is as follows: The first MLD and the second MLD directly transmit information through the first communication link, and the first MLD transmits information to the second MLD through the first relay MLD. The transmission manner may be understood as a joint transmission manner on the first communication link and the second communication link.

For example, when service periods are allocated to implement joint transmission on the first communication link and the second communication link, a first service period may be allocated to the first MLD on the first communication link, and a second service period may be allocated to the first MLD on the second communication link, so that the first MLD can directly transmit the information to the second MLD through the first communication link in the first service period, and can transmit the information to the second MLD through the first relay MLD in the second service period. In other words, the first MLD transmits the information to the first relay MLD through the second communication link in the second service period, and the first relay MLD transmits the received information to the second MLD through the second communication link in a corresponding service period.

For ease of understanding, with reference to FIG. 21, the following describes in detail an allocation manner of service periods corresponding to different communication links when joint transmission on the first communication link and the second communication link is implemented. Details are not described herein.

As shown above, in the communication method shown in FIG. 12, the first communication link (a low frequency, for example, below 7 GHz) assists the second communication link (for example, a millimeter wave, above 40 GHz) in relay device selection and setup, and the like, and management information and control information (for example, the first request message) may be efficiently transferred to each device through the first communication link, thereby reducing relay transmission establishment overheads.

FIG. 13 is a diagram of obtaining information about a relay MLD. A source MLD is the first MLD shown in FIG. 12, a destination MLD is the second MLD shown in FIG. 12, and a PCP/AP MLD is the third MLD in the communication method shown in FIG. 12. Such a manner of obtaining the information about the relay MLD includes the following steps.

S1310: The source MLD sends a second request message to the PCP/AP MLD.

Specifically, the source MLD sends the second request message to the PCP/AP MLD through a first communication link. The second request message is used to request the PCP/AP MLD to provide information about at least one relay MLD that may provide a relay service for the source MLD and the destination MLD. The second request message carries information about the source MLD and information about the destination MLD.

Optionally, the second request message may be a relay search request message.

In a possible implementation, the PCP/AP MLD may determine, based on information carried in the second request message and locally stored information about different MLDs, the at least one relay MLD that may provide the relay service for the source MLD and the destination MLD, and provide the information about the at least one relay MLD for the source MLD through a second response message.

In another possible implementation, the PCP/AP MLD may determine, based on information carried in the second request message and locally stored information about different MLDs, that no device can serve as a relay device, and may directly feed back that relay setup is not supported.

The following provides descriptions by using an example in which the PCP/AP MLD determines that a device can serve as a relay device.

S1320: The PCP/AP MLD sends the second response message to the source MLD.

Specifically, the PCP/AP MLD sends the second response message to the source MLD through the first communication link. The second response message includes the information about the at least one relay MLD, and the first relay MLD is one of the at least one relay MLD.

For example, the information, about the at least one relay MLD, included in the second response message includes but is not limited to an identifier of the at least one relay MLD (for example, a relay MLD identifier list) and capability information of the at least one relay MLD. The capability information may be information indicating that an MLD can serve as a relay MLD, or may be information indicating a relay transmission mode supported by the relay MLD.

Optionally, the second response message is a relay search response message.

Further, when the PCP/AP MLD provides the information about the at least one relay MLD for the source MLD, the PCP/AP MLD may actively provide the information about the at least one relay MLD for the destination MLD. In FIG. 13, the following step may be further included.

S1330: The PCP/AP MLD sends the second response message to the destination MLD.

Specifically, the PCP/AP MLD sends the second response message to the destination MLD through the first communication link.

It should be noted that, both a message that is sent by the PCP/AP MLD to the source MLD and that carries the information about the at least one relay MLD and a message that is sent by the PCP/AP MLD to the destination MLD and that carries the information about the at least one relay MLD are referred to as second response messages. However, it should be understood that a destination address of the message that is sent by the PCP/AP MLD to the source MLD and that carries the information about the at least one relay MLD is different from a destination address of the message that is sent by the PCP/AP MLD to the destination MLD and that carries the information about the at least one relay MLD. For ease of differentiation, the second response message in step S1320 is referred to as a second response message #1, and the second response message in step S1330 is referred to as a second response message #2. In this embodiment, merely for ease of description, two messages with different destination addresses are named the same name.

In the case shown in FIG. 13, the first MLD may obtain the information about the relay MLD from the PCP/AP MLD through the first communication link. Compared with the relay device discovery procedure shown in FIG. 8, in this way, the third MLD may feed back the information about the relay MLD through the first communication link, and may provide the information about the relay MLD for both the first MLD and the second MLD through omnidirectional transmission, thereby improving feedback efficiency.

It should be noted that, in the case shown in FIG. 13, the PCP/AP MLD may provide the information about the relay MLD while the PCP/AP MLD locally stores information about different MLDs. In this embodiment, the PCP/AP MLD may obtain the information about different MLDs in an MLD association procedure. For ease of understanding, with reference to (a) and (b) in FIG. 14, the following describes in detail a manner in which the PCP/AP MLD obtains the information about different MLDs.

(a) in FIG. 14 is another diagram of obtaining information about a relay MLD according to an embodiment of this application. A to-be-associated MLD is the first MLD, the relay MLD, or the second MLD shown in FIG. 12, and a PCP/AP MLD is the third MLD in the communication method shown in FIG. 12. Such a manner of obtaining information about the relay MLD includes the following steps.

S1410: The to-be-associated MLD sends a third request message to the PCP/AP MLD.

The third request message includes information about the to-be-associated MLD.

The to-be-associated MLD in FIG. 14 may be one or more of a relay MLD, a destination MLD, and a source MLD.

In a possible implementation, the third request message is an MLD association request frame, and the MLD association request frame includes capability information of the relay MLD, the destination MLD, and the source MLD on a second communication link, for example, includes capability information such as whether the to-be-associated MLD can serve as the relay source MLD or the destination MLD, whether the to-be-associated MLD can serve as the relay MLD, a relay operation mode (there is a switching mode or a cooperation mode between a direct link from the source MLD to the destination MLD and a relay link from the source MLD to the relay MLD and then to the destination MLD), and whether there is power supply.

In another possible implementation, the third request message is an MLD probe request frame. For example, before MLD association, MLD probe (Probe) can be performed. One or more of the relay MLD, the destination MLD, and the source MLD send the MLD probe request frame to the AP MLD. The MLD probe request frame includes capability information of the relay MLD, the destination MLD, and the source MLD on the second communication link.

S1420: The PCP/AP MLD sends a third response message to the to-be-associated MLD.

The third response message includes information about the PCP/AP MLD.

In a possible implementation, if the third request message is an MLD association request frame, the third response message is an MLD association response frame, and the MLD association response frame includes capability information of the PCP/AP MLD on the second communication link, for example, includes capability information such as whether the PCP/AP MLD can serve as the relay source MLD or the destination MLD, whether the PCP/AP MLD can serve as the relay MLD, a relay operation mode (there is a switching mode or a cooperation mode between the direct link from the source MLD to the destination MLD and the relay link from the source MLD to the relay MLD and then to the destination MLD), and whether there is power supply.

In another possible implementation, if the third request message is an MLD probe request frame, the third response message is an MLD probe response frame, and the MLD probe request frame includes capability information of the PCP/AP MLD on the second communication link.

Optionally, a beacon frame broadcast by the PCP/AP MLD on a first communication link may also include the capability information of the PCP/AP MLD on the second communication link.

In the procedure shown in (a) in FIG. 14, different MLDs exchange, on the first communication link, respective capability information on the second communication link.

For ease of understanding, a procedure of associating the relay MLD, the destination MLD, the source MLD, and the PCP/AP MLD is described with reference to (b) in FIG. 14.

(b) in FIG. 14 is still another diagram of obtaining information about a relay MLD according to an embodiment of this application. The method includes the following steps.

S1411: The relay MLD, a destination MLD, or a source MLD sends a probe request frame to a PCP/AP MLD.

Specifically, the relay MLD, the destination MLD, or the source MLD sends the probe request frame to the PCP/AP MLD through a first communication link. The probe request frame carries capability information of the relay MLD, the destination MLD, or the source MLD on a second communication link.

S1412: The PCP/AP MLD sends a probe response frame to the relay MLD, the destination MLD, or the source MLD.

Specifically, the PCP/AP MLD sends the probe response frame to the relay MLD, the destination MLD, or the source MLD through the first communication link. The probe response frame carries the capability information of the PCP/AP MLD on the second communication link.

S1413: The PCP/AP MLD sends a beacon frame to the relay MLD, the destination MLD, or the source MLD.

Specifically, the PCP/AP MLD sends the beacon frame to the relay MLD, the destination MLD, or the source MLD through the first communication link.

Optionally, the beacon frame carries the capability information of the PCP/AP MLD on the second communication link.

S1414: The relay MLD, the destination MLD, or the source MLD sends an association request frame to the PCP/AP MLD.

Specifically, the relay MLD, the destination MLD, or the source MLD sends the association request frame to the PCP/AP MLD through the first communication link. The association request frame carries the capability information of the relay MLD, the destination MLD, or the source MLD on the second communication link.

S1415: The PCP/AP MLD sends an association response frame to the relay MLD, the destination MLD, or the source MLD.

Specifically, the PCP/AP MLD sends the association response frame to the relay MLD, the destination MLD, or the source MLD through the first communication link. The probe association response frame carries the capability information of the PCP/AP MLD on the second communication link.

For example, when the first MLD obtains the information about the first relay MLD in step S1210, if the first MLD serves as the PCP/AP MLD, for a manner in which the first MLD obtains the information about the relay MLD, refer to the procedure shown in FIG. 14. For example, the first MLD receives a third request message from the first relay MLD through the first communication link. The third request message includes the information about the first relay MLD. It should be understood that the first MLD may obtain information about at least one relay MLD in the procedure shown in FIG. 14, and the first relay MLD is one of the at least one relay MLD.

FIG. 15 is a diagram of relay MLD selection according to an embodiment of this application. A source MLD is the first MLD shown in FIG. 12, a destination MLD is the second MLD shown in FIG. 12, a relay MLD is the first relay MLD shown in FIG. 12, and a PCP/AP MLD is the third MLD in the communication method shown in FIG. 12. Such a relay MLD selection manner includes the following steps.

S1510: The PCP/AP MLD sends first indication information.

The first indication information indicates to perform channel sounding.

For example, the PCP/AP MLD triggers, on a first communication link based on the first indication information, the source MLD, a candidate relay MLD, and the destination MLD to perform channel measurement. For example, the AP MLD sends a null data packet announcement (Null Data Packet Announcement, NDPA) frame on the first communication link, to notify a part or all of the source MLD, the relay MLD, and the destination MLD on the first communication link to perform channel sounding.

Optionally, the PCP/AP MLD may send the first indication information to the source MLD, the candidate relay MLD, and the destination MLD in a system through omnidirectional sending.

In this embodiment, after receiving the indication information #1, the source MLD, the candidate relay MLD, and the destination MLD may implement channel quality measurement by sending a sounding PPDU. For example, after receiving the indication information #1, the source MLD sends a sounding PPDU#1 to the candidate relay MLD and the destination MLD. The sounding PPDU#1 is used to measure channel quality between the relay MLD and the source MLD and channel quality between the relay MLD and the destination MLD that are on the first communication link. For another example, after receiving the indication information #1, the destination MLD sends a sounding PPDU#2 to the candidate relay MLD and the source MLD. The sounding PPDU#2 is used to measure channel quality between the relay MLD and the source MLD and channel quality between the relay MLD and the destination MLD that are on the first communication link. For another example, after receiving the indication information #1, the relay MLD sends a sounding PPDU#3 to the destination MLD and the source MLD. The sounding PPDU#3 is used to measure channel quality between the relay MLD and the source MLD and channel quality between the relay MLD and the destination MLD that are on the first communication link.

For ease of description, the following provides descriptions by using an example in which a relay MLD in the candidate relay MLD sends a sounding PPDU. A procedure of the method shown in FIG. 15 further includes the following steps.

S1520: The relay MLD sends the sounding PPDU.

Specifically, the relay MLD that receives the first indication information may send the sounding PPDU to the source MLD and the destination MLD through the first communication link. The sounding PPDU is used to measure channel quality between the relay MLD and the source MLD and channel quality between the relay MLD and the destination MLD that are on the first communication link.

For example, the PCP/AP MLD sends an NDP on the first communication link. The NDP is used by the source MLD and the destination MLD to measure channel quality between the relay MLD and each of the source MLD and the destination MLD on the first communication link.

Optionally, the relay MLD may send the sounding PPDU to the source MLD and the destination MLD in the system through omnidirectional sending.

For example, after receiving the sounding PPDU, the source MLD may measure channel quality between the source MLD and the relay MLD based on the sounding PPDU, to obtain first channel information. After receiving the sounding PPDU, the destination MLD may measure channel quality between the destination MLD and the relay MLD based on the sounding PPDU, to obtain second channel information, and send the measured second channel information to the source MLD through the first communication link. The procedure of the method shown in FIG. 15 further includes the following steps.

S1530: The destination MLD sends a channel measurement report to the source MLD.

The channel measurement report includes second channel information between the destination MLD and the relay MLD.

It should be understood that another relay MLD in the candidate relay MLD may also send a sounding PPDU, and perform step S1520 and step S1530. In this way, the source MLD may obtain different candidate relay MLDs and the source MLD, and channel quality between different candidate relay MLDs and the destination MLD. Therefore, the source MLD may perform preliminary relay MLD selection based on obtained channel quality information. Optionally, if there are a plurality of candidate relay MLDs, the plurality of candidate relay MLDs may perform a plurality of groups of channel measurement in serial to obtain channel quality.

S1540: The source MLD selects the relay MLD.

Specifically, the source MLD may obtain channel quality between different candidate relay MLDs and the source MLD and channel quality between different candidate relay MLDs and the destination MLD in a channel measurement procedure on the first communication link. Therefore, the source MLD may perform relay MLD selection based on the obtained channel quality.

For example, the source MLD obtains channel quality #1 corresponding to a relay MLD #1, channel quality #2 corresponding to a relay MLD #2, and channel quality #3 corresponding to a relay MLD #3, and screens out a relay MLD whose channel quality does not meet a preset condition (for example, a signal-to-noise ratio (Signal-Noise Ratio, SNR), a signal to interference plus noise ratio (Signal to Interference plus Noise Ratio, SINR), or a received signal strength indicator (Received Signal Strength Indicator, RSSI) is lower than a preset value).

FIG. 16 is another diagram of relay MLD selection according to an embodiment of this application. A source MLD is the first MLD shown in FIG. 12, the first MLD serves as a PCP/AP MLD, a destination MLD is the second MLD shown in FIG. 12, and a relay MLD is the first relay MLD shown in FIG. 12. Such a relay MLD selection manner includes the following steps.

S1610: A source MLD sends first indication information.

Based on the descriptions of step S1510, a difference lies in that in this embodiment, a device that is triggered based on the first indication information to perform channel measurement on the first communication link is the source MLD. Details are not described herein again.

S1620: The relay MLD sends a sounding PPDU.

S1630: The destination MLD sends a channel measurement report to the source MLD.

S1640: The source MLD selects the relay MLD.

For descriptions of steps S1620 to S1640, refer to the descriptions of steps S1520 to S1540. Details are not described herein again.

In this embodiment, the source MLD may roughly select a candidate relay MLD in the foregoing manner. This helps reduce overheads caused by directly performing beamforming training on a second communication link. In addition, channel sounding is performed on the first communication link, and information transmission may be directly performed between devices. This helps quickly complete training. For example, the sounding PPDU sent by the relay MLD through omnidirectional transmission may be received by both the source MLD and the destination MLD.

Further, after preliminarily selecting some relay MLDs, the source MLD may further perform relay MLD selection on the second communication link.

In a possible implementation, after preliminarily selecting some relay MLDs, the source MLD may perform relay MLD selection on the second communication link in an existing relay MLD selection manner, for example, the relay MLD selection procedure shown in FIG. 9. Details are not described herein again.

In another possible implementation, after preliminarily selecting some relay MLDs, the source MLD may use the first communication link to assist in sending some control or management information, to accelerate the relay MLD selection procedure on the second communication link, and improve reliability of a corresponding signal.

FIG. 17 is still another diagram of relay MLD selection according to an embodiment of this application. The following steps are included:

S1710: A PCP/AP MLD sends information about a service period.

For example, the PCP/AP may allocate a service period to each relay through omnidirectional broadcast on a first communication link and/or a second communication link. Omnidirectional broadcast may be understood as that the PCP/AP simultaneously allocates a service period to each relay.

### S1720: Beamforming training.

Each relay separately performs beamforming (Beamforming, BF) processing, namely, beamforming training, on the second communication link with a destination MLD and a source MLD in a corresponding SP. After beamforming training, data transmission may be performed on the second communication link.

S1730: The source MLD sends a channel measurement request message to a relay MLD and the destination MLD.

The channel measurement request message is used to request to obtain third channel information between the source MLD and the relay MLD and fourth channel information between the destination MLD and the relay MLD that correspond to the second communication link.

For example, the relay MLD measures the third channel information between the source MLD and the relay MLD in response to the channel measurement request message.

For example, the destination MLD measures the fourth channel information between the destination MLD and the relay MLD in response to the channel measurement request message.

S1740: The source MLD receives channel measurement request responses from the relay MLD and the destination MLD.

For example, the relay MLD provides the measured third channel information to the source MLD based on a channel measurement request response, and the destination MLD provides the measured fourth channel information to the source MLD based on a channel measurement request response.

S1750: The source MLD performs relay MLD selection.

Specifically, the source MLD may obtain channel quality between different candidate relay MLDs and the source MLD and channel quality between different candidate relay MLDs and the destination MLD in a channel measurement procedure initiated for the second communication link on the first communication link. Therefore, the source MLD may perform relay MLD selection based on the obtained channel quality.

For example, the source MLD obtains channel quality #1 corresponding to a relay MLD #1, channel quality #2 corresponding to a relay MLD #2, and channel quality #3 corresponding to a relay MLD #3, and screens out a relay MLD whose channel quality does not meet a preset condition (for example, a signal-to-noise ratio (Signal Noise Ratio, SNR), a signal to interference plus noise ratio (Signal to Interference plus Noise Ratio, SINR), or a received signal strength indicator (Received Signal Strength Indicator, RSSI) is lower than a preset value).

FIG. 18 is yet another diagram of relay MLD selection according to an embodiment of this application. The following steps are included:

### S1810: A source MLD sends information about a service period.

Based on the descriptions of step S1710, a difference lies in that a device to which the information about the service period is allocated in this embodiment is the source MLD. Details are not described herein again.

### S1820: Beamforming training.

S1830: The source MLD sends a channel measurement request to a relay MLD and a second MLD.

S 1840: The source MLD receives channel measurement responses from the relay MLD and the second MLD.

S1850: The source MLD performs relay MLD selection.

For descriptions of steps S1820 to S1850, refer to the descriptions of steps S1720 to S1750. Details are not described herein again.

For example, in this embodiment, because the source MLD, a destination MLD, and the relay MLD all support a first communication link and a second communication link, the first communication link and the second communication link may cooperate to perform relay transmission. If same content is transmitted on the two links, data reliability can be improved; or if different content is transmitted on the two links, a data throughput can be improved. A service period may be allocated to the first communication link and the second communication link, so that the first communication link and the second communication link cooperate to perform relay transmission.

As shown in FIG. 12, a first MLD may further indicate, based on a notification message, to end relay transmission or switch the relay transmission mode. With reference to FIG. 19 and FIG. 20, the following describes a procedure in which the first MLD indicates, based on the notification message, to end relay transmission or switch the relay transmission mode.

FIG. 19 is a diagram of indicating to end relay transmission or switch a relay transmission mode according to an embodiment of this application. A source MLD is the first MLD shown in FIG. 12, a destination MLD is the second MLD shown in FIG. 12, a relay MLD is the first relay MLD shown in FIG. 12, and a PCP/AP MLD is the third MLD in the communication method shown in FIG. 12. Such a relay MLD selection manner includes the following steps.

S1910: The source MLD sends a notification message.

Specifically, the source MLD sends the notification message to the destination MLD, the relay MLD, and the PCP/AP MLD on a first communication link. The notification message indicates to end relay transmission or switch a relay transmission mode. For example, the notification message notifies the destination MLD and the relay MLD to stop transmitting information through a second communication link. For another example, the notification message notifies the destination MLD and the relay MLD to change the relay transmission mode.

Optionally, the source MLD may send the notification message to the destination MLD, the relay MLD, and the PCP/AP MLD in a system through omnidirectional sending.

Optionally, after receiving the notification message, the destination MLD may notify, based on a notification response message, the source MLD, the relay MLD, and the PCP/AP MLD that relay transmission is ended or switching of the relay transmission mode is completed.

S 1920: The source MLD receives the notification response message.

FIG. 20 is a diagram of indicating to end relay transmission or switch a relay transmission mode according to an embodiment of this application. A source MLD is the first MLD shown in FIG. 12, the first MLD serves as a PCP/AP MLD, a destination MLD is the second MLD shown in FIG. 12, and a relay MLD is the first relay MLD shown in FIG. 12. Such a relay MLD selection manner includes the following steps.

S2010: The source MLD sends a notification message.

S2120: The source MLD receives a notification response message.

For descriptions of steps S2010 and S2120, refer to the descriptions of steps S1910 and S 1920. Details are not described herein again.

FIG. 21 is a diagram of service period configuration according to an embodiment of this application.

As shown in FIG. 21, when allocating a service period, a PCP/AP MLD may send information about the service period through a first communication link and/or a second communication link (for example, a link 1 of the PCP/AP MLD in FIG. 21). The PCP/AP MLD allocates a second service period to a source MLD on the second communication link, and allocates a third service period to a relay MLD on the second communication link (for example, a service period 21 of the source MLD on a link 2 and a service period 22 of the relay MLD on the link 2 in FIG. 21). In addition, the PCP/AP MLD allocates a first service period to the source MLD on the first communication link (for example, a service period 1 of the source MLD on the link 1 in FIG. 21).

Because the PCP/AP MLD allocates the service period to the source MLD on both the first communication link and the second communication link, and allocates the service period to the relay MLD on the second communication link, data may be directly sent by the source MLD to a destination MLD on the first communication link. On the second communication link, the data is first sent by the source MLD to the relay MLD, and then sent by the relay MLD to the destination MLD.

For example, when the PCP/AP MLD allocates the service period, if a difference between an end moment of the first service period and an end moment of the third service period is less than a second threshold, and a difference between a start moment of the first service period and a start moment of the second service period is less than a first threshold, the data can be scheduled from the source MLD to the destination MLD while (or within a specific time difference) the data is scheduled on the first communication link and the second communication link. For example, the source MLD shown in FIG. 21 sends data to the destination MLD through the link 1 in a service period 1, and receives an acknowledgement from the destination MLD through the link 1 in the service period 1. In addition, the source MLD sends data to the relay MLD through the link 2 in the service period 21, and receives an acknowledgement from the relay MLD through the link 2 in the service period 21. The relay MLD sends data to the destination MLD through the link 2 in the service period 22, and receives an acknowledgement from the destination MLD through the link 2 in the service period 22.

Optionally, the action of allocating the service period in FIG. 21 may be implemented by another MLD. For example, if the source MLD is the PCP/AP MLD, the source MLD may implement service period allocation and information transmission in the service period. For another example, if the destination MLD is the PCP/AP MLD, the destination MLD may implement service period allocation and information transmission in the service period. For another example, if the relay MLD is the PCP/AP MLD, the relay MLD may implement service period allocation and information transmission in the service period. Examples are enumerated herein.

It should be understood that sequence numbers of the foregoing processes do not mean execution sequences. The execution sequence of the processes should be determined based on functions and internal logic of the processes, and should not be construed as any limitation on implementation processes of embodiments of this application.

It should be further understood that, in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It should be further understood that in some of the foregoing embodiments, a device in an existing network architecture is mainly used as an example for description. It should be understood that a specific form of the device is not limited in embodiments of this application. For example, all devices that can implement a same function in the future are applicable to embodiments of this application.

It may be understood that, in the foregoing method embodiments, methods and operations implemented by a device (for example, the first MLD or the first relay MLD) may also be implemented by a component (for example, a chip or a circuit) used in the device.

It may be further understood that, some optional features in embodiments of this application may be independent of other features in some scenarios, or may be combined with other features in some scenarios. This is not limited.

The foregoing describes in detail the communication method provided in embodiments of this application with reference to FIG. 12. The communication method is mainly described from a perspective of interaction between the first MLD and the first relay MLD. It may be understood that, to implement the foregoing functions, the first MLD and the first relay MLD include corresponding hardware structures and/or software modules for performing the functions.

A person skilled in the art may be aware that, with reference to the examples described in embodiments disclosed in this specification, units and algorithm steps can be implemented by hardware or a combination of computer software and hardware in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

The following describes in detail a communication apparatus provided in embodiments of this application with reference to FIG. 22 to FIG. 24. It should be understood that descriptions of apparatus embodiments correspond to the descriptions of the method embodiments. Therefore, for content that is not described in detail, refer to the foregoing method embodiments. For brevity, some content is not described again.

In embodiments of this application, functional modules of a transmitter device or a receiver device may be divided based on the foregoing method examples. For example, functional modules may be divided based on functions, or two or more functions may be integrated into one processing module. The integrated module may be implemented in a form of hardware, or may be implemented in a form of a software functional module. It should be noted that, in embodiments of this application, division into modules is an example, and is merely a logical functional division. In actual implementation, another division manner may be used. An example in which each functional module is obtained through division based on each corresponding function is used below for description.

FIG. 22 is a block diagram of a communication apparatus 10 according to an embodiment of this application. The apparatus 10 includes a transceiver module 11 and a processing module 12. The transceiver module 11 may implement a corresponding communication function, and the processing module 12 is configured to perform data processing; or the transceiver module 11 is configured to perform receiving and sending related operations, and the processing module 12 is configured to perform an operation other than receiving and sending. The transceiver module 11 may also be referred to as a communication interface or a communication unit.

Optionally, the apparatus 10 may further include a storage module 13. The storage module 13 may be configured to store instructions and/or data. The processing module 12 may read the instructions and/or the data in the storage module, to cause the apparatus to implement actions of a device in the foregoing method embodiments.

In a design, the apparatus 10 may correspond to the first MLD in the foregoing method embodiment, or may be a component (for example, a chip) of the first MLD.

The apparatus 10 may implement a corresponding step or procedure performed by the first MLD in the foregoing method embodiments. The transceiver module 11 may be configured to perform receiving and sending related operations of the first MLD in the foregoing method embodiments. The processing module 12 may be configured to perform a processing related operation of the first MLD in the foregoing method embodiments.

In a possible implementation, the transceiver module 11 is configured to obtain information about a first relay MLD through a first communication link, where the first relay MLD is used to relay information transmitted by the first MLD to a second MLD through a second communication link. The transceiver module 11 is further configured to send a first request message to the first relay MLD and the second MLD through the first communication link. The first request message is used to request to establish a second communication link between the first MLD and the first relay MLD and a second communication link between the second MLD and the first relay MLD. A frequency band on which the first communication link operates is lower than a frequency band on which the second communication link operates.

When the apparatus 10 is configured to perform the method in FIG. 12, the transceiver module 11 may be configured to perform steps of receiving and sending information in the method, for example, steps S1210 and S1220; and the processing module 12 may be configured to perform a processing step in the method.

It should be understood that a specific process in which the units perform the foregoing corresponding steps is described in detail in the foregoing method embodiments, and for brevity, details are not described herein.

In another design, the apparatus 10 may correspond to the first relay MLD in the foregoing method embodiment, or may be a component (for example, a chip) of the first relay MLD.

The apparatus 10 may implement a corresponding step or procedure performed by the first relay MLD in the foregoing method embodiments. The transceiver module 11 may be configured to perform receiving and sending related operations of the first relay MLD in the foregoing method embodiments. The processing module 12 may be configured to perform a processing related operation of the first relay MLD in the foregoing method embodiments.

In a possible implementation, the transceiver module 11 is configured to receive a first request message from a first MLD through a first communication link. The first request message is used to request to establish a second communication link between the first MLD and the first relay MLD and a second communication link between the second MLD and the first relay MLD, and the first relay MLD is used to relay information transmitted by the first MLD to the second MLD through a second communication link. The processing module 12 is configured to establish the second communication link between the first MLD and the first relay MLD and the second communication link between the second MLD and the first relay MLD in response to the first request message. A frequency band on which the first communication link operates is lower than a frequency band on which the second communication link operates.

When the apparatus 10 is configured to perform the method in FIG. 12, the transceiver module 11 may be configured to perform steps of receiving and sending information in the method, for example, step S1220; and the processing module 12 may be configured to perform a processing step in the method.

It should be understood that a specific process in which the units perform the foregoing corresponding steps is described in detail in the foregoing method embodiments, and for brevity, details are not described herein.

It should be further understood that the apparatus 10 herein is presented in a form of a functional module. The term "module" herein may be an application-specific integrated circuit (application-specific integrated circuit, ASIC), an electronic circuit, a processor (for example, a shared processor, a dedicated processor, or a group processor) configured to execute one or more software or firmware programs, a memory, a combined logic circuit, and/or another appropriate component that supports the described function. In an optional example, a person skilled in the art may understand that the apparatus 10 may be specifically a mobility management network element in the foregoing embodiments, and may be configured to perform procedures and/or steps corresponding to the mobility management network element in the foregoing method embodiments. Alternatively, the apparatus 10 may be specifically the terminal device in the foregoing embodiments, and may be configured to perform procedures and/or steps corresponding to the terminal device in the foregoing method embodiments. To avoid repetition, details are not described herein again.

The apparatus 10 in each of the foregoing solutions has a function of implementing corresponding steps performed by a device (for example, the first MLD) in the foregoing methods. The function may be implemented by hardware, or may be implemented by hardware executing corresponding software. The hardware or software includes one or more modules corresponding to the foregoing functions. For example, the transceiver module may be replaced with a transceiver (for example, a sending unit in the transceiver module may be replaced with a transmitter, and a receiving unit in the transceiver module may be replaced with a receiver), and another unit, for example, the processing module, may be replaced with a processor, to separately perform receiving and sending operations and a related processing operation in the method embodiments.

In addition, the transceiver module 11 may alternatively be a transceiver circuit (for example, may include a receiving circuit and a sending circuit), and the processing module may be a processing circuit.

FIG. 23 is a diagram of another communication apparatus 20 according to an embodiment of this application. The apparatus 20 includes a processor 21. The processor 21 is configured to: execute a computer program or instructions stored in a memory 22, or read data/signaling stored in a memory 22, to perform the methods in the foregoing method embodiments. Optionally, there are one or more processors 21.

Optionally, as shown in FIG. 23, the apparatus 20 further includes a memory 22, and the memory 22 is configured to store a computer program or instructions and/or data. The memory 22 and the processor 21 may be integrated together, or may be disposed separately. Optionally, there are one or more memories 22.

Optionally, as shown in FIG. 23, the apparatus 20 further includes a transceiver 23, and the transceiver 23 is configured to receive and/or send a signal. For example, the processor 21 is configured to control the transceiver 23 to receive and/or send a signal.

In a solution, the apparatus 20 is configured to implement operations performed by the first MLD or the first relay MLD in the foregoing method embodiments.

It should be understood that, the processor mentioned in embodiments of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor, or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, but not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, a memory (storage module) may be integrated into the processor.

It should further be noted that the memory described herein is intended to include, but is not limited to, these and any other appropriate type of memory.

FIG. 24 is a diagram of a chip system 30 according to an embodiment of this application. The chip system 30 (also referred to as a processing system) includes a logic circuit 31 and an input/output interface (input/output interface) 32.

The logic circuit 31 may be a processing circuit in the chip system 30. The logic circuit 31 may be coupled and connected to a storage unit, and invoke instructions in the storage unit, to cause the chip system 30 to implement the methods and functions in embodiments of this application. The input/output interface 32 may be an input/output circuit in the chip system 30, and outputs information processed by the chip system 30, or inputs to-be-processed data or signaling information to the chip system 30 for processing.

In a solution, the chip system 30 is configured to implement operations performed by the first MLD or the first relay MLD in the foregoing method embodiments.

For example, the logic circuit 31 is configured to implement a processing related operation performed by the first MLD or the first relay MLD in the foregoing method embodiments, and the input/output interface 32 is configured to implement a sending and/or receiving related operation performed by the first MLD or the second MLD in the foregoing method embodiments.

An embodiment of this application further provides a computer-readable storage medium. The computer-readable storage medium stores computer instructions for implementing the method performed by a device in the foregoing method embodiments.

For example, when the computer program is executed by a computer, the computer is enabled to implement the method performed by the first MLD or the first relay MLD in the foregoing method embodiments.

An embodiment of this application further provides a computer program product, including instructions. When the instructions are executed by a computer, the method performed by the first MLD or the first relay MLD in the foregoing method embodiments is implemented.

An embodiment of this application further provides a communication system, including the foregoing first MLD, the foregoing first relay MLD, the foregoing second MLD, and the foregoing third MLD.

For explanations and beneficial effects of related content in any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. For example, the computer may be a personal computer, a server, a network device, or the like. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. For example, the foregoing usable medium may include but is not limited to any medium that can store program code, for example, a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
obtaining, by a first multi-link device MLD, information about a first relay MLD through a first communication link, wherein the first relay MLD is used to relay information transmitted by the first MLD to a second MLD through a second communication link; and
sending, by the first MLD, a first request message to the first relay MLD and the second MLD through the first communication link, wherein the first request message is used to request to establish a second communication link between the first MLD and the first relay MLD and a second communication link between the second MLD and the first relay MLD, wherein
a frequency band on which the first communication link operates is lower than a frequency band on which the second communication link operates.

2. The method according to claim 1, wherein obtaining, by the first MLD, the information about the first relay MLD through the first communication link comprises:
sending, by the first MLD, a second request message to a third MLD through the first communication link, wherein the second request message is used to request to obtain information about at least one relay MLD that provides a relay service for the first MLD and the second MLD; and
receiving, by the first MLD, a second response message from the third MLD through the first communication link, wherein the second response message comprises the information about the at least one relay MLD, and the first relay MLD is one of the at least one relay MLD.

3. The method according to claim 1, wherein obtaining, by the first MLD, the information about the first relay MLD through the first communication link comprises:
receiving, by the first MLD, a third request message from the first relay MLD through the first communication link, wherein the third request message comprises the information about the first relay MLD.

4. The method according to any one of claims 1 to 3, wherein the method further comprises:
receiving, by the first MLD, a sounding physical layer protocol data unit from the first relay MLD through the first communication link;
measuring, by the first MLD based on the sounding physical layer protocol data unit, first channel information between the first MLD and the first relay MLD that corresponds to the first communication link; and
receiving, by the first MLD, second channel information from the second MLD, wherein the second channel information is channel information between the second MLD and the first relay MLD that corresponds to the first communication link.

5. The method according to any one of claims 1 to 4, wherein the method further comprises:
sending, by the first MLD, a channel measurement request message to the first relay MLD and the second MLD through the first communication link, wherein the channel measurement request message is used to request to obtain third channel information between the first MLD and the first relay MLD and fourth channel information between the second MLD and the first relay MLD that correspond to the second communication link; and
receiving, by the first MLD, the third channel information from the first relay MLD through the first communication link, and receiving the fourth channel information from the second MLD through the first communication link.

6. The method according to any one of claims 1 to 5, wherein the method further comprises:
receiving, by the first MLD, information about a service period corresponding to the first relay MLD from the third MLD through the first communication link.

7. The method according to any one of claims 1 to 5, wherein the method further comprises:
allocating, by the first MLD, a service period corresponding to the first relay MLD to the first relay MLD; and
sending, by the first MLD, information about the service period corresponding to the first relay MLD to the first relay MLD through the first communication link.

8. The method according to any one of claims 1 to 7, wherein the method further comprises:
determining, by the first MLD, a first service period corresponding to the first communication link and a second service period corresponding to the second communication link, wherein
the first MLD and the second MLD perform information transmission through the first communication link in the first service period, the first MLD and the first relay MLD perform information transmission in the second service period, and a difference between a start moment of the first service period and a start moment of the second service period is less than a first threshold.

9. The method according to claim 8, wherein determining, by the first MLD, the first service period corresponding to the first communication link and the second service period corresponding to the second communication link comprises:
receiving, by the first MLD, information about the first service period and information about the second service period from the third MLD.

10. The method according to claim 8, wherein determining, by the first MLD, the first service period corresponding to the first communication link and the second service period corresponding to the second communication link comprises:
allocating, by the first MLD, the first service period corresponding to the first communication link, and the second service period and a third service period that correspond to the second communication link; and
the method further comprises:
sending, by the first MLD, information about the third service period to the second MLD and the first relay MLD through the first communication link, wherein
the second MLD and the first relay MLD perform information transmission in the third service period, and a difference between an end moment of the first service period and an end moment of the third service period is less than a second threshold.

11. The method according to any one of claims 1 to 10, wherein the method further comprises:
sending, by the first MLD, a notification message to the first relay MLD and the second MLD through the first communication link, wherein the notification message indicates to end relay transmission, or the notification message indicates to switch a relay transmission mode.

12. A communication method, comprising:
receiving, by a first relay multi-link device MLD, a first request message from a first MLD through a first communication link, wherein the first request message is used to request to establish a second communication link between the first MLD and the first relay MLD and a second communication link between a second MLD and the first relay MLD, and the first relay MLD is used to relay information transmitted by the first MLD to the second MLD through a second communication link; and
establishing, by the first relay MLD, the second communication link between the first MLD and the first relay MLD and the second communication link between the second MLD and the first relay MLD in response to the first request message, wherein
a frequency band on which the first communication link operates is lower than a frequency band on which the second communication link operates.

13. The method according to claim 12, wherein the method further comprises:
sending, by the first relay MLD, a third request message to a third MLD through the first communication link, wherein the third request message comprises information about the first relay MLD.

14. The method according to claim 12 or 13, wherein the method further comprises:
receiving, by the first relay MLD, information about a service period of the first relay MLD through the first communication link, wherein in the service period of the first relay MLD, the first relay MLD and the first MLD perform beamforming training, and the first relay MLD and the second MLD perform beamforming training.

15. The method according to any one of claims 12 to 14, wherein the method further comprises:
sending, by the first relay MLD, a sounding physical layer protocol data unit to the first MLD and the second MLD through the first communication link, wherein the sounding physical layer protocol data unit is used to measure first channel information between the first MLD and the first relay MLD that corresponds to the first communication link, and measure second channel information between the second MLD and the first relay MLD that corresponds to the first communication link.

16. The method according to any one of claims 12 to 15, wherein the method further comprises:
receiving, by the first relay MLD, a channel measurement request message from the first MLD through the first communication link, wherein the channel measurement request message is used to request to obtain third channel information between the first MLD and the first relay MLD that corresponds to the second communication link; and
sending, by the first relay MLD, a channel measurement response message to the first MLD through the first communication link, wherein the channel measurement response message comprises the third channel information.

17. The method according to any one of claims 12 to 15, wherein the method further comprises:
receiving, by the first relay MLD, a notification message from the first MLD through the first communication link, wherein the notification message indicates to end relay transmission, or the notification message indicates to switch a relay transmission mode.

18. A communication method, comprising:
receiving, by a third relay multi-link device MLD, at least one third request message from at least one relay MLD through a first communication link, wherein the third request message comprises information about the relay MLD;
receiving, by the third MLD, a second request message from a first MLD through the first communication link, wherein the second request message is used to request to obtain information about at least one relay MLD that relays information transmitted by the first MLD to a second MLD through a second communication link; and
sending, by the third MLD, a second response message to the first MLD and the second MLD through the first communication link, wherein the second response message comprises the information about the at least one relay MLD, wherein
a frequency band on which the first communication link operates is lower than a frequency band on which the second communication link operates.

19. The method according to claim 18, wherein the method further comprises:
sending, by the third MLD, first indication information to the first MLD, the second MLD, and the at least one relay MLD through the first communication link, wherein the first indication information indicates a part or all of the first MLD, the second MLD, and the at least one relay MLD to perform channel measurement.

20. The method according to claim 18 or 19, wherein the method further comprises:
sending, by the third MLD, second indication information to the first MLD, the second MLD, and the at least one relay MLD through the first communication link, wherein the second indication information comprises information about a service period of each of the at least one relay MLD.

21. The method according to any one of claims 18 to 20, wherein the method further comprises:
allocating, by the third MLD, a first service period corresponding to the first communication link, and a second service period and a third service period that correspond to the second communication link; and
sending, by the third MLD, information about the first service period and information about the second service period to the first MLD, and sending information about the third service period to the second MLD and the first relay MLD, wherein
the first MLD and the second MLD perform information transmission through the first communication link in the first service period, the first MLD and the first relay MLD perform information transmission in the second service period, the second MLD and the first relay MLD perform information transmission in the third service period, a difference between an end moment of the first service period and an end moment of the third service period is less than a second threshold, and a difference between a start moment of the first service period and a start moment of the second service period is less than a first threshold.

22. A communication apparatus, comprising a unit configured to perform the method according to any one of claims 1 to 11, or comprising a unit configured to perform the method according to any one of claims 12 to 17, or comprising a unit configured to perform the method according to any one of claims 18 to 21.

23. A communication apparatus, comprising:
a processor, configured to execute a computer program stored in a memory, to enable the apparatus to perform the method according to any one of claims 1 to 11, enable the apparatus to perform the method according to any one of claims 12 to 17, or enable the apparatus to perform the method according to any one of claims 18 to 21.

24. The apparatus according to claim 23, wherein the apparatus further comprises the memory.

25. A computer-readable storage medium, wherein the computer-readable storage medium stores a computer program, and when the computer program is run on a computer, the computer is enabled to perform the method according to any one of claims 1 to 21.

26. A computer program product, wherein the computer program product comprises instructions for performing the method according to any one of claims 1 to 21.
